(19) **Europäisches Patentamt / European Patent Office / Office européen des brevets**

(11) **EP 3 651 508 B1**

(12) **EUROPEAN PATENT SPECIFICATION**

(45) Date of publication and mention of the grant of the patent:
**02.06.2021 Bulletin 2021/22**

(21) Application number: **17919536.7**

(22) Date of filing: **28.07.2017**

(51) Int Cl.:
*H04W 52/14* (2009.01)   *H04W 52/24* (2009.01)

(86) International application number:
**PCT/CN2017/095035**

(87) International publication number:
**WO 2019/019186 (31.01.2019 Gazette 2019/05)**

(54) **METHOD AND DEVICE FOR UPLINK POWER CONTROL**

VERFAHREN UND VORRICHTUNG ZUR STEUERUNG DER UPLINK-LEISTUNG

PROCÉDÉ ET DISPOSITIF DE RÉGULATION DE PUISSANCE DE LIAISON MONTANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.05.2020 Bulletin 2020/20**

(73) Proprietor: **Huawei Technologies Co., Ltd.**
**Longgang District**
**Shenzhen, Guangdong 518129 (CN)**

(72) Inventors:
• **ZHAO, Yaqi**
  **Shenzhen**
  **Guangdong 518129 (CN)**
• **ZHOU, Guohua**
  **Shenzhen**
  **Guangdong 518129 (CN)**
• **SHI, Xiaoli**
  **Shenzhen**
  **Guangdong 518129 (CN)**
• **WU, Nanlong**
  **Shenzhen**
  **Guangdong 518129 (CN)**

(74) Representative: **Grünecker Patent- und Rechtsanwälte**
**PartG mbB**
**Leopoldstraße 4**
**80802 München (DE)**

(56) References cited:
EP-A2- 2 464 176          WO-A1-2015/011557
CN-A- 101 635 933         CN-A- 103 535 086
CN-A- 104 144 486         CN-A- 104 837 190
US-A1- 2017 041 884

• QUALCOMM EUROPE: "Uplink inter-cell Interference Management - Sensitivity of L1 load indicator to other cell geometry", 3GPP DRAFT; R1-071099, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Louis, USA; 20070206, 6 February 2007 (2007-02-06), XP050105092, [retrieved on 2007-02-06]

## Description

### TECHNICAL FIELD

This application relates to the field of communications technologies, and in particular, to an uplink power control method and apparatus.

### BACKGROUND

In a wireless communications system, uplink power control is performed at a signal transmit end, to allow a signal receive end to correctly demodulate a signal, and to avoid relatively strong interference, caused by an excessive high signal transmit power, to a neighboring cell of a cell in which the signal transmit end is located. A combination of open-loop power control and closed-loop power control is used for uplink power control in a long term evolution (long term evolution, LTE) system. The open-loop power control means that a transmit power of a terminal is determined based on a downlink path loss, and the closed-loop power control means that an uplink transmit power is adjusted by sending a power control command (power control commands) to the terminal.

A radio signal transmitted in the air has different characteristics from that transmitted on the ground. When the radio signal is transmitted in the air, due to blocking of fewer obstacles, line of sight propagation of the signal significantly increases compared with that of the radio signal communicated on the ground. In this case, compared with a signal sent by a terminal on the ground, the signal sent by a terminal in the air may be received by more cells, and the signal received by these cells may be relatively strong. This causes relatively strong uplink interference to these cells.

Currently, a drone is more widely applied, and air communication of the drone causes relatively strong uplink interference to neighboring cells. For this type of terminal, how to reduce uplink interference through uplink power control is an issue that needs to be currently resolved.

CN 104 144 486 A discloses an uplink power control method wherein pathloss from a UE to a serving cell and path loss from the UE to an adjacent cell that is mostly interfered by the UE are estimated.

WO 2015/011557 A1 discloses a method for determining uplink transmission power wherein the transmission power spectral density and interference generated by an UE are taken into account.

EP 2 464 176 A2 discloses a method for controlling the uplink power of a mobile station based on an open loop uplink power control component and a closed loop uplink power control component.

Qualcomm Europe, in "Uplink inter-cell Interference Management - Sensitivity of L1 load indicator to other cell geometry", 3GPP Draft; R1-071099, vol. RAN WG1, no. St. Louis, USA, 6 February 2007, discloses a procedure of uplink inter-cell interference management based on closed loop power spectral density control.

### SUMMARY

Embodiments of this application provide an uplink power control method and apparatus, to reduce uplink interference from a terminal to a neighboring cell.

According to a first aspect, an uplink power control method is provided according to claim 1, including: determining, by a terminal, a power control parameter based on neighboring cell information of the terminal, where the power control parameter includes an interference impact parameter or a path correction parameter of a downlink path loss, and the path correction parameter of the downlink path loss is used to correct a downlink path loss participating in calculation of a transmit power; and determining, by the terminal, the transmit power based on the determined power control parameter.

In the foregoing embodiment, because the terminal determines, based on the neighboring cell information, the power control parameter used to calculate the transmit power, a factor of uplink interference from the terminal to a neighboring cell is introduced into a calculating process of the transmit power, in other words, the uplink interference from the terminal to the neighboring cell is taken as a consideration to calculate the transmit power. Therefore, when the terminal sends a signal by using the transmit power, the uplink interference to the neighboring cell can be reduced.

According to the invention, the neighboring cell information includes one or any combination of the following information: a reference signal transmit power of a neighboring cell, an uplink interference over thermal noise ratio of the neighboring cell, uplink load of the neighboring cell.

According to the foregoing embodiment, during specific implementation, the interference impact parameter or the path correction parameter of the downlink path loss may be determined based on a plurality of the foregoing types of neighboring cell information. In this way, the interference to the neighboring cell is estimated accurately, and further the uplink interference to the neighboring cell can be better suppressed by using the uplink power control method provided in this embodiment of this application.

According to the invention, the process of determining the interference impact parameter or the path correction parameter of the downlink path loss includes: determining a downlink path loss between a first neighboring cell and the terminal based on a reference signal transmit power of the first neighboring cell and a reference signal received strength of the first neighboring cell obtained through measurement by the terminal, where the first neighboring cell is one of neighboring cells of the terminal; and determining the interference impact parameter or the path correction parameter of the downlink path loss based on the downlink path loss between the first neighboring cell and the terminal or based on the downlink path loss between the first neighboring cell and the terminal and neighboring cell information of the first neighboring cell. The first neighboring cell is indicated by a network side, or is selected by the terminal from the neighboring cells of the terminal, and the first neighboring cell is a cell that receives strong uplink interference among the neighboring cells of the terminal.

According to the foregoing embodiment, in one aspect, the interference impact parameter or the path correction parameter of the downlink path loss is calculated based on a downlink path loss between the neighboring cell and the terminal. Because the downlink path loss between the neighboring cell and the terminal can reflect an uplink interference degree from the terminal to the neighboring cell, the interference impact parameter or the path correction parameter of the downlink path loss calculated based on the downlink path loss can accurately reflect interference from the terminal to the neighboring cell. Further, the uplink interference can be better suppressed by using the uplink power control method provided in this embodiment of this application. In the other aspect, when the downlink path loss between the neighboring cell and the terminal is calculated, the selected neighboring cell is a cell that receives strong uplink interference among the neighboring cells of the terminal, for example, may be a cell that receives strongest uplink interference. In this way, the downlink path loss between the cell and the terminal is used as a basis for calculating the interference impact parameter or the path correction parameter of the downlink path loss. Therefore, the transmit power calculated based on the interference impact parameter or the correction parameter may suppress the uplink interference to the cell that receives strong interference.

According to the invention, the interference impact parameter is determined and obtained according to a first formula or a second formula:

the first formula is:

$$\beta_c = \theta / PL_M,$$

the second formula is:

$$\beta_c = \theta \cdot \frac{x \cdot IoT_M + y \cdot Load_M}{z \cdot PL_M}, \;$$

and

the third formula is:

$$\beta_c = \theta \cdot \frac{Load_M}{PL_M}, \;$$

where
$\beta_c$ represents the interference impact parameter, $PL_M$ represents a downlink path loss between a cell M and the terminal, $IoT_M$ represents an uplink interference over thermal noise ratio of the cell M, $Load_M$ represents uplink load of the cell M, and $\theta$, $x$, $y$, and $z$ are specified values; and the cell M is the first neighboring cell; or

the path correction parameter of the downlink path loss is determined and obtained according to a third formula, a fourth formula, or a fifth formula:

the third formula is:

$$\alpha_c = \alpha - \gamma \big/ PL_M,$$

the fourth formula is:

$$\alpha_c = \alpha - \gamma \cdot \frac{x \cdot IoT_M + y \cdot Load_M}{z \cdot PL_M},$$

and

the fifth formula is:

$$\alpha_c = \alpha - \gamma \cdot \frac{Load_M}{PL_M},$$

where

$\alpha_c(j)$ represents a path correction parameter of an downlink path loss, $PL_M$ represents a downlink path loss between a cell M and the terminal, $IoT_m$ represents an uplink interference over thermal noise ratio of the cell M, $Load_m$ represents uplink load of the cell M, and $\alpha$, $\gamma$, $x$, $y$, and $z$ are specified values; and the cell M is the first neighboring cell.

In a possible implementation, when the power control parameter includes the interference impact parameter, the determining, by the terminal, the transmit power based on the determined power control parameter includes: determining, by the terminal, the transmit power based on the interference impact parameter, the downlink path loss, and a parameter configured by the network side; or when the power control parameter includes the path correction parameter of the downlink path loss, the determining, by the terminal, the transmit power based on the determined power control parameter includes: correcting, by the terminal based on the path correction parameter of the downlink path loss, the downlink path loss participating in calculation of the transmit power, and determining the transmit power based on the corrected downlink path loss and a parameter configured by the network side.

According to another aspect, an uplink power control apparatus according to claim 4 is provided, and is applied to a terminal. The apparatus has a function of implementing the terminal in the first aspect or any one of possible designs of the first aspect. The function may be implemented by hardware, or implemented by hardware executing corresponding software. The hardware or the software includes one or more modules corresponding to the foregoing function.

The apparatus includes a power control parameter determining module and a transmit power determining module. These modules may perform a corresponding function in the first aspect or any one of possible designs of the first aspect. For details, refer to detailed description in the method example. Details are not described herein.

In a possible design, a structure of the apparatus includes a communications interface, a processor, and a memory. The communications interface is configured to receive and send data. The processor is configured to support the processing device in performing a corresponding function in the first aspect or any one of possible designs of the first aspect. The memory is coupled to the processor, and the memory stores a program instruction and data that are necessary for the processor.

**BRIEF DESCRIPTION OF DRAWINGS**

FIG. 1 is a schematic diagram of a communication scenario to which an embodiment of this application is applied;
FIG. 2 is a schematic diagram of an uplink power control procedure provided in Solution 1 according to an embodiment of this application;
FIG. 3 is a schematic diagram of a signaling interworking procedure according to an embodiment of this application;
FIG. 4 is a schematic diagram of another uplink power control procedure provided in Solution 1 according to an embodiment of this application;
FIG. 5 is a schematic diagram of another signaling interworking procedure according to an embodiment of this application;
FIG. 6 shows an uplink power control procedure provided in Solution 2 according to an example not being part of the invention;
FIG. 7 is a schematic diagram of another signaling interworking procedure according to an example not being part of the invention;
FIG. 8 shows an uplink power control procedure provided in Solution 3 according to an example not being part of the invention;

FIG. 9 is a schematic structural diagram of an uplink power control apparatus according to an embodiment of this application;

FIG. 10 is a schematic structural diagram of a terminal according to an embodiment of this application;

FIG. 11 is a schematic structural diagram of another uplink power control apparatus according to an example not being part of the invention;

FIG. 12 is a schematic structural diagram of a base station according to an example not being part of the invention;

FIG. 13 is a schematic structural diagram of another uplink power control apparatus according to an example not being part of the invention;

FIG. 14 is a schematic structural diagram of another terminal according to an example not being part of the invention;

FIG. 15 is a schematic structural diagram of an information transmission apparatus according to an example not being part of the invention; and

FIG. 16 is a schematic structural diagram of a base station according to an embodiment of this application.

## DESCRIPTION OF EMBODIMENTS

The following describes the embodiments of this application and comparative examples with reference to accompanying drawings.

First, some terms in this application are explained and described for ease of understanding by a person skilled in the art.

(1) Network device: The network device may be referred to as a radio access network (Radio Access Network, RAN) device, and is a device that connects a terminal to a wireless network, including but not limited to: an evolved NodeB (evolved Node B, eNB), a radio network controller (Radio Network Controller, RNC), a NodeB (Node B, NB), a base station controller (Base Station Controller, BSC), a base transceiver station (Base Transceiver Station, BTS), a home base station (for example, a Home evolved NodeB or a Home Node B, HNB), a baseband unit (Base Band Unit, BBU), a wireless fidelity (Wireless Fidelity, WIFI) access point (Access Point, AP), and a transmission reception point (transmission and receiver point, TRP or transmission point, TP), a next generation NodeB (gNB), and the like.

(2) Terminal: The terminal is a device that provides voice and/or data connectivity for a user, and may include various handheld devices, vehicle-mounted devices, wearable devices, computing devices, or drones that have a wireless communication function, or another processing device connected to a wireless modem, and user equipment (User Equipment, UE), mobile stations (Mobile station, MS), terminal equipment (Terminal Equipment), and transmission reception points (transmission and receiver point, TRP or transmission point, TP) in various forms.

(3) Interaction: The interaction in this application is a process in which two parties in the interaction transfer information to each other. The information transferred herein may be the same or different. For example, if the two parties in the interaction are a base station 1 and a base station 2, the base station 1 may request information from the base station 2, and the base station 2 provides the base station 1 with the information requested by the base station 1. Certainly, the base station 1 and the base station 2 may request information from each other, and the information requested herein may be the same or different.

(4) "A plurality of" refers to two or more than two. The term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects.

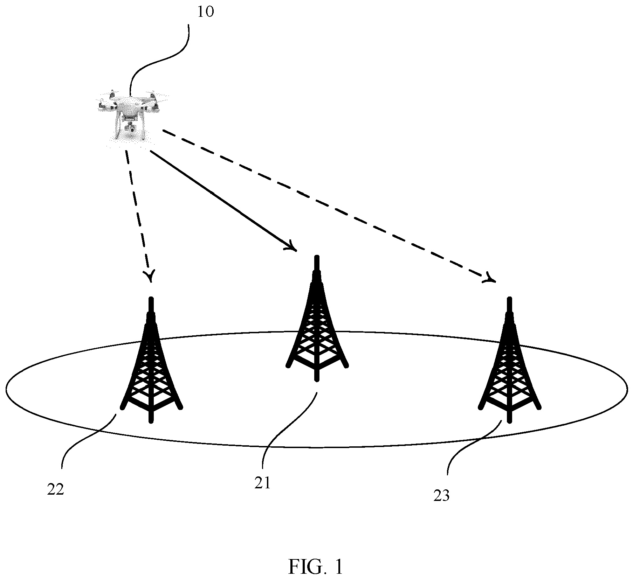

FIG. 1 is a schematic diagram of an example of a possible communication scenario. As shown in FIG. 1, a terminal 10 is a drone. The terminal 10 is located in the air and accesses a wireless network by using a base station 21, to obtain a service of an external network (for example, the internet) by using the wireless network, or communicate with another terminal by using the wireless network. A base station 22 and a base station 23 are nodes adjacent to the base station 21. When the terminal 10 sends a signal to the base station 21, because there is almost no obstacle on a signal transmission path, both the base station 22 and the base station 23 receive the signal, and the received signal is strong. In this way, cells within coverage areas of the base station 22 and the base station 23 may receive strong uplink interference. The base stations may exchange information with each other by using a link between the base stations. The base stations may be replaced with other network devices, for example, RAN nodes.

Based on the foregoing communication scenario, in the embodiments of this application, uplink interference from a terminal to a neighboring cell is estimated, and the uplink interference is introduced into an uplink power control process performed by the terminal. In other words, the estimated uplink interference to the neighboring cell is used as one of bases for performing uplink power control by the terminal, to reduce the uplink interference to the neighboring cell.

It may be understood that the solutions in the embodiments of this application may further be applied to another wireless communications network, for example, may be applied to a future 5G new radio (New Radio, NR) communication architecture.

Therefore, the embodiments of this application provide the following solutions 1 and 3.

Solution 1: When performing uplink power control, a terminal estimates uplink interference from the terminal to a neighboring cell, affects a power control parameter based on an estimation result, and performs the uplink power control based on the power control parameter.

Solution 2 (example not being part of the invention): A network configures a plurality of power control parameter sets for a terminal, and a network device selects one of the plurality of configured power control parameter sets based on uplink interference from the terminal to a neighboring cell, and notifies the terminal of the selected power control parameter set, so that the terminal performs uplink power control based on a power control parameter in the power control parameter set.

Solution 3: A network configures a plurality of power control parameter sets for a same channel or a same signal, and the configured power control parameter set corresponds to an operating mode of a terminal. When performing uplink power control, a terminal first determines the operating mode of the terminal, selects a power control parameter set corresponding to the current operating mode from the plurality of power control parameter sets based on the operating mode of the terminal, and performs the uplink power control based on a power control parameter in the selected power control parameter set.

The "neighboring cell" in the embodiments of this application is a neighboring cell of a cell in which the terminal is located. The terminal usually has a plurality of neighboring cells, and the neighboring cells of the terminal may include a cell that belongs to the same base station coverage area as the cell in which the terminal is located, and may also include a cell that belongs to a different base station coverage area from the cell in which the terminal is located.

The following separately describes the foregoing three solutions with reference to the accompanying drawings.

Solution 1

In an uplink power control procedure provided in Solution 1, the terminal needs to estimate the interference from the terminal to the neighboring cell, and the interference from the terminal to the neighboring cell may be represented by using an interference impact parameter. The interference impact parameter may be determined based on neighboring cell information. It should be noted that the "interference impact parameter" is merely an example of a name, and the name of the parameter is not limited in this embodiment of this application.

During specific implementation, neighboring cell interference information may be determined based on the neighboring cell information and at least one of information about the terminal and measurement information of the terminal, and then the interference impact parameter is determined based on the neighboring cell interference information. The determined neighboring cell interference information may include some or all of the following information: a downlink path loss between the neighboring cell and the terminal, an uplink interference over thermal noise ratio (interference over thermal, IoT) of the neighboring cell, uplink load of the neighboring cell, and the like.

The information about the terminal may include a height in which the terminal is located, or other information that can reflect a status, a location, a communication status, or the like of the terminal.

The measurement information of the terminal may include a reference signal received power (reference signal receiving power, RSRP) of the terminal for a signal from the neighboring cell. A network side may configure measurement performed by the terminal, for example, may configure information measured by the terminal. A specific type of the measurement information of the terminal is not limited in this embodiment of this application, and the terminal may perform measurement based on the measurement configuration by the network side.

The neighboring cell information includes information about one or more neighboring cells. For one of the one or more neighboring cells, neighboring cell information of the cell may include one or any combination of the following information: an RS transmit power of the cell, an uplink IoT of the cell, uplink load of the cell, a downlink path loss threshold of the cell, a height in which a base station corresponding to the cell is located, and the like.

Neighboring base stations may exchange neighboring cell information with each other by using a link between the base stations. The base station may send the neighboring cell information to a terminal within a coverage area of the base station. For a terminal, neighboring cell information received by the terminal from a base station serving the terminal may include information about a neighboring cell within a coverage area of the serving base station, and may also include information about a neighboring cell within a coverage area of another base station. The base station may send the neighboring cell information to the terminal by using dedicated signaling or a broadcast message. The dedicated signaling may be a radio resource control (radio resource control, RRC) message. Optionally, the base station may organize the neighboring cell information into a form of neighboring cell list and send the neighboring cell list to the terminal. The neighboring cell list includes information about one or more neighboring cells. One index is allocated to each neighboring cell, to index information about a corresponding neighboring cell.

In addition to the neighboring cell information to the terminal, the base station may further send indication information to the terminal to indicate a neighboring cell that receives strong uplink interference, for example, a neighboring cell that receives strongest uplink interference. The indicated neighboring cell is a neighboring cell in the neighboring cell list sent by the base station to the terminal. The indication information may be sent by using downlink control information (downlink control information, DCI). The indication information may be an index of the neighboring cell that receives strong uplink interference among the neighboring cell list, or may be indicated in a bitmap (bitmap) manner. For example, a binary sequence is sent to the terminal. A quantity of bits in the binary sequence is the same as a quantity of neighboring cells in the neighboring cell list sent to the terminal, and one bit corresponds to one neighboring cell. If a value of the bit is 1, a corresponding neighboring cell is a cell that receives strong uplink interference. If a value of the bit is 0, a corresponding neighboring cell does not receive strong uplink interference.

For a terminal, a base station may determine by itself a neighboring cell that receives strong uplink interference among neighboring cells of the terminal. In an example, for a terminal, if a base station receives uplink load information (for example, an overload indicator (overload indicator)) and/or a high interference indicator (high interference indicator, HII) of a neighboring cell of the terminal, and the base station schedules uplink data transmission of the terminal on a corresponding resource block (resource block, RB), it may be determined that the neighboring cell receives relatively strong uplink interference. In another example, for a terminal, if a base station determines that an uplink IoT sent by a neighboring cell (or a base station in which the neighboring cell is located) of the terminal exceeds a specified threshold, it may be determined that the neighboring cell receives relatively strong uplink interference.

When the terminal is located in the air, a signal sent by the terminal may cause relatively strong uplink interference to a neighboring cell. Uplink power control needs to be performed by using the method provided in this embodiment of this application, to reduce the uplink interference. To determine whether the terminal is located in the air or on the ground, two operating modes: an air mode and a ground mode are defined in this embodiment of this application. The air mode is a communication mode when the terminal is located in the air, and the ground mode is an operating mode when the terminal is located on the ground. Optionally, in this embodiment of this application, before sending the neighboring cell information to the terminal, the base station may determine the operating mode of the terminal, that is, the base station may determine whether the terminal is in the air mode or in the ground mode. If the terminal is in the air mode, the base station sends the neighboring cell information to the terminal by using dedicated signaling. Certainly, the operating mode of the terminal may be not limited to the foregoing two types. For example, the air mode may be further divided based on different height ranges. The operating mode of the terminal may be determined by the base station, or may be reported by the terminal to the base station after the operating mode is determined.

Both the base station and the terminal may determine the operating mode of the terminal based on one or a combination of the following information: information about the terminal, measurement information of the terminal, and neighboring cell information. The information about the terminal may include a height in which the terminal is located, or other information that can reflect a status, a location, a communication status, or the like of the terminal. Content included in the measurement information of the terminal and the neighboring cell information are the same as those described above.

In an example of determining the operating mode of the terminal based on the information about the terminal, if the height in which the terminal is located exceeds a specified threshold (the height in which the terminal is located may be obtained through positioning), it is determined that the terminal is in the air mode. Otherwise, it is determined that the terminal is in the ground mode.

In an example of determining the operating mode of the terminal based on the measurement information of the terminal, if a downlink path loss between the terminal and a neighboring cell is less than a specified threshold, it may be determined that the terminal is in the air mode. Otherwise, it is determined that the terminal is in the ground mode. The downlink path loss between the terminal and the neighboring cell may be calculated based on the neighboring cell information and the measurement information of the terminal. For example, a downlink path loss between a cell and the terminal is equal to a difference between an RS transmit power of the cell and an RSRP of the cell obtained through measurement by the terminal. In another example of determining the operating mode of the terminal based on the measurement information of the terminal, if the terminal determines, through measurement, that an RSRP of a neighboring cell exceeds a specified threshold, and a quantity of neighboring cells whose RSRP of the neighboring cell exceeds a specified threshold reaches a preset threshold, it may be determined that the terminal is in the air mode. Otherwise, it is determined that the terminal is in the ground mode.

In an example of determining the operating mode of the terminal based on the information about the terminal and the measurement information of the terminal, if the height in which the terminal is located exceeds a specified threshold and a downlink path loss between the terminal and a neighboring cell is less than a specified threshold, it is determined that the terminal is in the air mode. Otherwise, it is determined that the terminal is in the ground mode. The downlink path loss between the terminal and the neighboring cell may be calculated based on the neighboring cell information and the measurement information of the terminal.

In another example, the base station may also determine, based on a type of the terminal, whether to send the neighboring cell information to the terminal. Specifically, if determining that the terminal is a terminal of a drone type, the base station sends the neighboring cell information to the terminal.

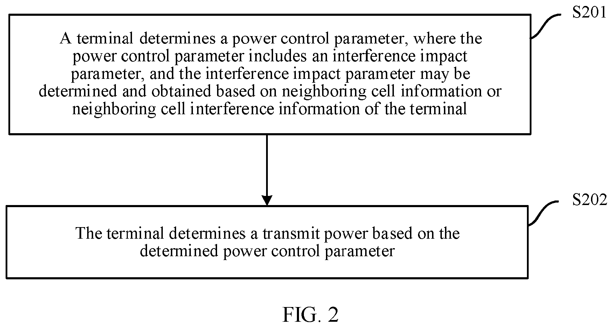

FIG. 2 is a schematic diagram of an uplink power control procedure provided in Solution 1 according to an embodiment of this application. As shown in FIG. 2, when performing uplink power control, a terminal may perform the following procedure.

S201: The terminal determines a power control parameter, where the power control parameter includes an interference impact parameter, and the interference impact parameter may be determined and obtained based on neighboring cell information or neighboring cell interference information of the terminal.

The power control parameter is used as an input parameter of a transmit power calculation formula, to calculate a transmit power. In this embodiment of this application, the interference impact parameter is used as the power control parameter to participate in calculation of the transmit power. In addition to the interference impact parameter, the power control parameter may further include another parameter, for example, a parameter configured by a network side.

The interference impact parameter may be a function of the neighboring cell information or the neighboring cell interference information. The neighboring cell information may be sent to the terminal by using a base station. For a manner of sending the neighboring cell information and content included in the neighboring cell information, refer to the foregoing descriptions. Details are not described herein again.

In an example, the terminal may determine a downlink path loss between the terminal and a neighboring cell based on neighboring cell information and measurement information of the terminal, may further determine an uplink IoT of the neighboring cell, uplink load of the neighboring cell, and the like, and determines an interference impact parameter based on the determined information.

The following describes a method for determining the interference impact parameter by using an example in which a cell in which a terminal is located is a cell c and a cell M is a neighboring cell of the cell c.

In an example of the method for determining the interference impact parameter, the base station may determine a downlink path loss between the cell M and the terminal based on an RS transmit power of the cell M and an RSRP of the cell M obtained through measurement by the terminal, and determines the interference impact parameter based on the downlink path loss. Specifically, the interference impact parameter $\beta_c$ may be determined according to the following formula:

$$\beta_c = \theta / PL_M \quad [1]$$

where $PL_M$ is the downlink path loss between the cell M and the terminal; $PL_M = referenceSignalPower_M - RSRP_M$, where $referenceSignalPower_M$ represents the RS transmit power of the cell M, and may be obtained from the neighboring cell information sent by the base station to the terminal (the neighboring cell information includes the RS transmit power of the cell M); and $RSRP_M$ represents the RSRP of the cell M obtained through measurement by the terminal.

$\theta$ may be a specified value. Specifically, $\theta$ may be configured by a higher layer. The higher layer may configure, by using RRC signaling, $\theta$ for the terminal or a parameter used to determine $\theta$, and a value of $\theta$ is calculated by the terminal based on the parameter. In this example, $\theta$ is a non-positive value. If the terminal is in an air mode, $\theta$ is a negative value. If the terminal is in a ground mode, $\theta$ is 0.

In another example of the method for determining the interference impact parameter, the base station may determine the interference impact parameter based on more factors. For example, the base station may determine a downlink path loss between the cell M and the terminal based on an RS transmit power of the cell M and an RSRP of the cell M obtained through measurement by the terminal, and determines the interference impact parameter based on the downlink path loss, uplink load of the cell M, an uplink IoT of the cell M, and the like. Specifically, the interference impact parameter $\beta_c$ may be determined according to the following formula:

$$\beta_c = \theta \cdot \frac{x \cdot IoT_M + y \cdot Load_M}{z \cdot PL_M} \quad [2]$$

where $PL_M$ represents the downlink path loss between the cell M and the terminal; $IoT_M$ represents the uplink interference over thermal noise ratio of the cell M; $Load_M$ represents the uplink load of the cell M; and $x$, $y$, and $z$ are specified values; and may be preset or configured by a higher layer, where values of x, y, and z may be greater than or equal to 0. A value and a meaning of $\theta$ are the same as those described above.

In another example of the method for determining the interference impact parameter, the base station may determine a downlink path loss between the cell M and the terminal based on an RS transmit power of the cell M and an RSRP of the cell M obtained through measurement by the terminal, and determines the interference impact parameter based on the downlink path loss and uplink load of the cell M. Specifically, the interference impact parameter $\beta_c$ may

be determined according to the following formula:

$$\beta_c = \theta \cdot \frac{Load_M}{PL_M} \quad [3]$$

The cell M in the foregoing methods for determining the interference impact parameter is used as a reference neighboring cell for uplink interference estimation, and the cell M may be any neighboring cell among neighboring cells of the terminal, may be selected by the terminal, or may be indicated by the base station. As described above, the base station may send indication information to the terminal to indicate a neighboring cell that receives strong uplink interference.

To estimate the uplink interference more properly to better reduce the uplink interference to the neighboring cell, as the reference neighboring cell for the uplink interference estimation, the cell M may be a cell that meets a specific condition in the neighboring cells of the terminal. For example, the cell may be a cell that receives strong uplink interference (for example, a cell that receives strongest uplink interference), or a cell with a small path loss (for example, a cell with a smallest path loss), or a cell with a large uplink IoT (for example, a cell with a largest uplink IoT), or a cell with heavy uplink load (for example, a cell with heaviest uplink load). Alternatively, the reference cell may be selected by comprehensively considering information about each neighboring cell. For example, a cell with a small downlink path loss, large uplink load, and a large uplink IoT is selected. A method for selecting the reference cell is shown according to the following expression:

$$M = \underset{m \in M}{\arg\max}(\frac{x \cdot IoT_m + y \cdot Load_m}{z \cdot PL_m}) \quad [4]$$

where *x*, *y*, *z* are specified values, and may be preset or configured by a higher layer, where values of x, y, and z may be greater than or equal to 0; max() represents a maximum operation; and arg represents a value of a variable m, where the value of the variable makes a value of $\dfrac{x \cdot IoT_m + y \cdot Load_m}{z \cdot PL_m}$ maximum.

S202: The terminal determines the transmit power based on the determined power control parameter.

In this step, the terminal may use the interference impact parameter calculated in S202 as one of the power control parameters, and may determine the transmit power based on a downlink path loss between the cell in which the terminal is located and the terminal or further based on the parameter configured by the network side.

The following separately provides descriptions by using an example in which uplink power control is performed on a physical uplink control channel (Physical Uplink Control Channel, PUCCH), a physical uplink shared channel (physical uplink shared channel, PUSCH), a sounding reference signal (sounding reference signal, SRS), and a physical random access channel (physical random access channel, PRACH). It is agreed that the cell c is the cell in which the terminal is located.

When the uplink power control is performed on the PUCCH of the terminal, a transmit power of the PUCCH of the terminal may be determined according to the following formula (in a unit of dBm):

$$P_{PUCCH}(i) = \min\left\{ \begin{array}{l} P_{CMAX,c}(i), \\ P_{0\_PUCCH} + PL_c + h(n_{CQI}, n_{HARQ}, n_{SR}) + \Delta_{F\_PUCCH}(F) + \Delta_{TxD}(F') + g(i) + \beta_c \end{array} \right\} \quad [5]$$

where $P_{CMAX,c}(i)$ is a maximum transmit power of each subcarrier in the cell c; $P_{O\_PUCCH}$ is obtained by summing two parameters configured by the higher layer; $PL_c$ is a downlink path loss between the cell c and the terminal, where the downlink path loss is equal to a difference between an RS transmit power of the cell c and an RSRP of the cell c obtained through measurement by the terminal; $h(n_{CQI}, n_{HARQ}, n_{SR})$ represents a value related to a PUCCH format; $\Delta_{F\_PUCCH}(F)$ is configured by the higher layer and is related to the PUCCH format; $\Delta_{TxD}(F')$ is configured by the higher layer and is related to a quantity of ports on which the PUCCH is transmitted; $g(i) = g(i-1) + \sum_{m=0}^{M-1} \delta_{PUCCH}(i - k_m)$ , where $\delta_{PUCCH}$

is a value specific to the terminal, is fed back by the network side, and may be sent to each terminal by using the PDCCH; $\beta_c$ is the interference impact parameter calculated by using the method provided in the foregoing embodiment of this application; and min () indicates a minimum operation. In the formula (5), both $P_{\text{O\_PUCCH}}$ and $\beta_c$ are power control parameters.

If the terminal does not send the PUCCH in the cell in which the terminal is located, the transmit power of the PUCCH is determined according to the following formula (in a unit of dBm):

$$P_{\text{PUCCH}}(i) = \min\left\{ P_{\text{CMAX,c}}(i), P_{0\_\text{PUCCH}} + PL_c + g(i) + \beta_c \right\} \quad [6]$$

Meanings of some parameters in the formula (6) are the same as meanings of the corresponding parameters in the formula (5), and are not described herein again. $\beta_c$ is the interference impact parameter calculated by using the method provided in the foregoing embodiment of this application.

When uplink power control is performed on the PUSCH of the terminal, if the terminal does not simultaneously transmit the PUSCH and the PUCCH, a transmit power of the PUSCH of the terminal may be determined according to the following formula (in a unit of dBm):

$$P_{\text{PUSCH,c}}(i) = \min\left\{ \begin{array}{l} P_{\text{CMAX,c}}(i), \\ 10\log_{10}(M_{\text{PUSCH,c}}(i)) + P_{\text{O\_PUSCH,c}}(j) + \alpha_c(j)\cdot PL_c + \Delta_{\text{TF,c}}(i) + f_c(i) + \beta_c \end{array} \right\} [7]$$

where $\hat{P}_{\text{CMAX,c}}(i)$ is a maximum transmit power of each subcarrier in the cell c; $M_{\text{PUSCH,c}}(i)$ is a quantity of resource blocks (resource block, RB) occupied by the PUSCH in one subframe; $P_{\text{O\_PUSCH,c}}(j)$ is obtained by summing two parameters configured by the higher layer; $\alpha_c(j)$ is configured by the higher layer; $PL_c$ is a downlink path loss calculated by the terminal, where the downlink path loss is equal to a difference between an RS transmit power of the cell c and an RSRP of the cell c obtained through measurement by the terminal;

$$\Delta_{TF,c}(i) = 10\log_{10}\left( \left( 2^{BPRE\cdot K_s} - 1 \right) \cdot \beta_{offset}^{PUSCH} \right),$$ where $K_S$ is configured by the higher layer; $f_c(i)$ is a value configured by the higher layer and is related to $\delta_{\text{PUSCH,c}}$, and $\delta_{\text{PUSCH,c}}$ is a value related to a transmit power control (Transmitted Power Control, TPC) command indicated by a PDCCH/EPDCCH; $\beta_c$ is the interference impact parameter calculated by using the method provided in the foregoing embodiment of this application. In the formula (7), both $P_{\text{O\_PUSCH,c}}(j)$ and $\beta_c$ are power control parameters.

If the terminal simultaneously transmits the PUSCH and the PUCCH, a transmit power of the PUSCH of the terminal may be determined according to the following formula (in a unit of dBm):

$$P_{\text{PUSCH,c}}(i) = \min\left\{ \begin{array}{l} 10\log_{10}\left( \hat{P}_{\text{CMAX,c}}(i) - \hat{P}_{\text{PUCCH}}(i) \right), \\ 10\log_{10}(M_{\text{PUSCH,c}}(i)) + P_{\text{O\_PUSCH,c}}(j) + \alpha_c(j)\cdot PL_c + \Delta_{\text{TF,c}}(i) + f_c(i) + \beta_c \end{array} \right\}$$

$$[8]$$

where $\hat{P}_{\text{PUCCH}}(i)$ is the transmit power of the PUCCH. For other parameters, refer to the descriptions of the parameters in the formula (7).

If the terminal does not transmit the PUSCH, but receives a TPC command in DCI format 3/3A (DCI format 3/3A), the terminal assumes that a transmit power of the PUSCH is as follows (in a unit of dBm):

$$P_{\text{PUSCH,c}}(i) = \min\left\{ P_{\text{CMAX,c}}(i), P_{\text{O\_PUSCH,c}}(1) + \alpha_c(1)\cdot PL_c + f_c(i) + \beta_c \right\} \quad [9]$$

Meanings of some parameters in the formula (9) are the same as meanings of the corresponding parameters in the formula (8), and are not described herein again. $\beta_c$ is the interference impact parameter calculated by using the method provided in the foregoing embodiment of this application.

When an uplink power of the SRS of the terminal is controlled, a transmit power of the SRS may be determined according to the following formula (in a unit of dBm):

$$P_{\text{SRS},c}(i) = \min\left\{ P_{\text{CMAX},c}(i),\, P_{\text{SRS\_OFFSET},c}(m) + 10\log_{10}(M_{\text{SRS},c}) + P_{\text{O\_PUSCH},c}(j) + \alpha_c(j)\cdot PL_c + f_c(i) + \beta_c \right\} \quad [10]$$

where $P_{\text{SRS\_OFFSET},c}(m)$ is a semi-static parameter configured by the higher layer, $M_{\text{SRS},c}$ is a quantity of RBs occupied by the SRS in one subframe, $f_c(i)$ is a power control adjustment (power control adjustment) of the PUSCH. Definitions of $P_{\text{O\_PUSCH},c}(j)$ and $\alpha_c(j)$ are the same as those in the PUSCH power control formula, and $\beta_c$ is the interference impact parameter calculated by using the method provided in the foregoing embodiment of this application.

When a transmit power of the PRACH of the terminal is controlled, the transmit power of the PRACH may be determined according to the following formula (in a unit of dBm):

$$\text{PPRACH} = \min\{ P_{\text{CMAX},c}(i),$$

$$\text{PREAMBLE\_RECEIVED\_TARGET\_POWER} + PL_c + \beta_c \} \quad [11]$$

where PREAMBLE_RECEIVED_TARGET_POWER is configured by the higher layer, $PL_c$ is an estimated downlink path loss, and $\beta_c$ is the interference impact parameter calculated by using the method provided in the foregoing embodiment of this application. In the formula (11), both PREAMBLE_RECEIVED_TARGET_POWER and $\beta_c$ are power control parameters.

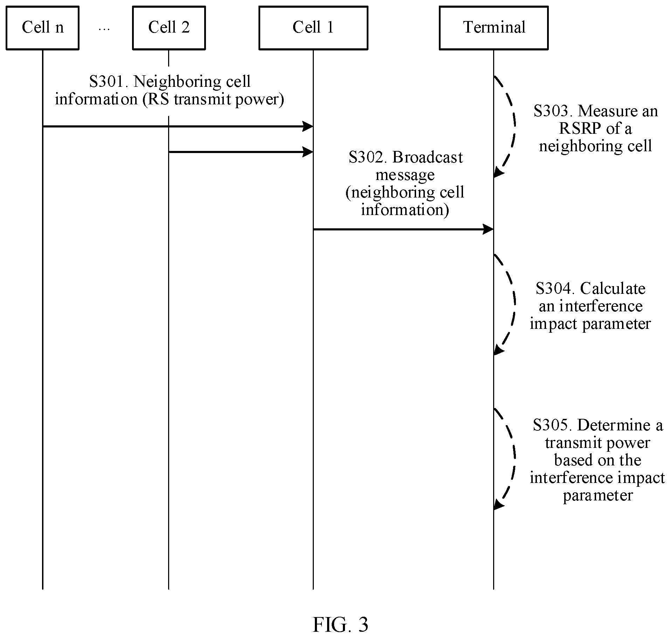

FIG. 3 is a schematic flowchart of signaling interaction according to the uplink power control procedure shown in FIG. 2. In an example, it is agreed that a cell 1 is a cell in which a terminal is located, a cell 2 to a cell n (n is an integer greater than 2) are neighboring cells of the cell 1, and an interference impact parameter is determined according to the formula (1). As shown in the figure, in S301, a base station to which the cell 2 to the cell n belongs separately sends information (including an RS transmit power) about the cell 2 to cell n to the base station to which the cell 1 belongs. In S302, the base station sends the information (including the RS transmit power) about the cell 2 to cell n to the terminal by using a broadcast message. In S303, the terminal measures RSRPs of the cell 2 to the cell n. In S304, the terminal selects a smallest downlink path loss based on measurement results in S303, and calculates the interference impact parameter according to the formula (1). In S305, the terminal uses the calculated interference impact parameter in S305 as one of power control parameters, to perform uplink power control.

It should be noted that, a time sequence of each step in FIG. 3 is merely an example, and a process of S301 and S302 is relatively independent of a process of S303 to S305. For example, when the terminal needs to perform the uplink power control, an uplink power control procedure may be performed according to S303 and S304, and a process of S301 and S302 is not necessarily included when the uplink power control is performed each time.

It can be learned from the foregoing embodiment that the interference impact parameter is determined based on the neighboring cell information, or further based on the information about the terminal and/or the measurement information of the terminal, and the interference impact parameter is used as one of the power control parameters, so that a neighboring cell interference factor is introduced into the uplink power control during the uplink power control. In this way, the uplink power control can be optimized, to reduce uplink interference from the terminal to the neighboring cell.

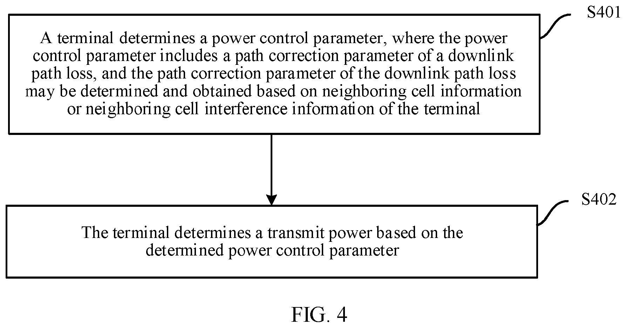

FIG. 4 is a schematic diagram of another uplink power control procedure provided in Solution 1 according to an embodiment of this application.

Similar to the procedure shown in FIG. 2, in the uplink power control procedure according to this embodiment of this application, interference from a terminal to a neighboring cell needs to be estimated, and the interference from the terminal to the neighboring cell may be represented by a path correction parameter of a downlink path loss. It should be noted that the "path correction parameter of a downlink path loss" is merely an example of a name, and the name of the parameter is not limited in this embodiment of this application.

The path correction parameter of the downlink path loss may be determined based on neighboring cell information or neighboring cell interference information. The neighboring cell interference information may be determined based on the neighboring cell information and at least one of information about the terminal and measurement information of the terminal. The determined neighboring cell interference information may include some or all of the following information: a downlink path loss between the neighboring cell and the terminal, an uplink interference over thermal noise ratio (interference over thermal, IoT) of the neighboring cell, uplink load of the neighboring cell, and the like.

Content and an interaction manner of the neighboring cell information, and a manner of sending the neighboring cell information by the base station to the terminal are the same as those in the foregoing embodiment. Definitions of the information about the terminal and the measurement information of the terminal are the same as those in the foregoing embodiment.

Similar to the foregoing embodiment, in addition to the neighboring cell information, the base station may send indication information to the terminal to indicate a neighboring cell that receives strong uplink interference, for example, a neighboring cell that receives strongest uplink interference.

Similar to the foregoing embodiment, before sending the neighboring cell information to the terminal, the base station may determine an operating mode of the terminal, that is, the base station may determine whether the terminal is in an air mode or in a ground mode. If the terminal is in the air mode, the base station sends the neighboring cell information to the terminal by using dedicated signaling. In another example, the base station may also determine, based on a type of the terminal, whether to send the neighboring cell information to the terminal. Specifically, if determining that the terminal is a terminal of a drone type, the base station sends the neighboring cell information to the terminal.

As shown in FIG. 4, when performing uplink power control, a terminal may perform the following procedure.

S401: The terminal determines a power control parameter, where the power control parameter includes a path correction parameter of a downlink path loss, and the path correction parameter of the downlink path loss may be determined and obtained based on neighboring cell information or neighboring cell interference information of the terminal. The correction parameter is used to correct a downlink path loss between a cell in which the terminal is located to the terminal, and the corrected downlink path loss may be used as an input parameter to participate in calculation of a transmit power. For example, the path loss may be corrected in a manner of multiplying the correction parameter by the downlink path loss between the cell in which the terminal is located and the terminal. Certainly, based on the correction parameter, the downlink path loss between the cell in which the terminal is located and the terminal may also be corrected by using another operation method.

The power control parameter is used as an input parameter of a transmit power calculation formula, to calculate the transmit power. In this embodiment of this application, the path correction parameter of the downlink path loss is used as one of the power control parameters to participate in calculation of the transmit power. In addition to the correction parameter, the power control parameter may further include another parameter, for example, a parameter configured by a network side.

The path correction parameter of the downlink path loss may be a function of the neighboring cell information or the neighboring cell interference information. The neighboring cell interference information may be determined and obtained based on the neighboring cell information and at least one of information about the terminal and measurement information of the terminal. The determined neighboring cell interference information may include one or a combination of the following information: a downlink path loss between the terminal and a neighboring cell (the downlink path loss may be obtained based on an RS transmit power of the neighboring cell and an RSRP of the neighboring cell obtained through measurement by the terminal), an uplink IoT of the neighboring cell, uplink load of the neighboring cell, and the like.

In an example, the terminal may determine the downlink path loss between the terminal and the neighboring cell based on the neighboring cell information and the measurement information of the terminal, may further determine the uplink IoT of the neighboring cell, the uplink load of the neighboring cell, and the like, and determines the path correction parameter of the downlink path loss based on the determined information.

The following describes a method for determining the path correction parameter of the downlink path loss by using an example in which the cell in which the terminal is located is a cell c and a cell M is a neighboring cell of the cell c.

In an example of the method for determining the correction parameter, a base station may determine a downlink path loss between the cell M and the terminal based on an RS transmit power of the cell M and an RSRP of the cell M obtained through measurement by the terminal, and determines the correction parameter based on the downlink path loss. Specifically, the correction parameter $\alpha_c$ may be determined according to the following formula:

$$\alpha_c = \alpha - \gamma\big/PL_M \qquad [12]$$

where $\alpha$ may be configured by a higher layer, and a value of $\alpha$ may be the same as a value of a corresponding parameter configured by the higher layer in a power control solution in an existing LTE system; $\gamma$ is configured by the higher layer, for example, $\gamma$ may be configured by using an RRC message, and A value of $\gamma$ may be greater than 0; $PL_M$ is the downlink path loss between the cell M and the terminal, and $PL_m = referenceSignalPower_M - RSRP_M$, where $referenceSigpalPower_M$ represents the RS transmit power of the cell M, and may be obtained from the neighboring cell information sent by the base station to the terminal (the neighboring cell information includes the RS transmit power of the cell M); and $RSRP_M$ represents the RSRP of the cell M measured by the terminal.

In another example of the method for determining the correction parameter, the base station may determine the correction parameter based on more factors. For example, the base station may determine the downlink path loss between the cell M and the terminal based on the RS transmit power of the cell M and the RSRP of the cell M obtained through measurement by the terminal, and determines the correction parameter based on the downlink path loss and the neighboring cell information of the cell M (uplink load of the cell M, an uplink IoT of the cell M, and the like). Specifically,

the correction parameter $\alpha_c$ may be determined according to the following formula:

$$\alpha_c = \alpha - \gamma \cdot \frac{x \cdot IoT_M + y \cdot Load_M}{z \cdot PL_M} \quad [13]$$

where $PL_M$ represents the downlink path loss between the cell M and the terminal; $IoT_M$ represents the uplink interference over thermal noise ratio of the cell M; $Load_M$ represents the uplink load of the cell M; and $x$, $y$, and $z$ are specified values; and may be preset or configured by a higher layer, where values of x, y, and z may be greater than or equal to 0. A value and a meaning of $\alpha$ are the same as those described above.

In another example of the method for determining the correction parameter, the base station may determine a downlink path loss between the cell M and the terminal based on an RS transmit power of the cell M and an RSRP of the cell M obtained through measurement by the terminal, and determines the correction parameter based on the downlink path loss and uplink load of the cell M. Specifically, the correction parameter $\alpha_c$ may be determined according to the following formula:

$$\alpha_c = \alpha - \gamma \cdot \frac{Load_M}{PL_M} \quad [14]$$

The cell M in the foregoing methods for determining the path correction parameter of the downlink path loss is used as a reference neighboring cell for uplink interference estimation, and the cell M may be any neighboring cell among neighboring cells of the terminal, may be selected by the terminal, or may be indicated by the base station. As described above, the base station may send indication information to the terminal to indicate a neighboring cell that receives strong uplink interference.

To estimate the uplink interference more properly to better reduce the uplink interference to the neighboring cell, as the reference neighboring cell for the uplink interference estimation, the cell M may be a cell that meets a specific condition in the neighboring cells of the terminal. For example, the cell may be a cell that receives strong uplink interference (for example, a cell that receives strongest uplink interference), or a cell with a small path loss (for example, a cell with a smallest path loss), or a cell with a large uplink IoT (for example, a cell with a largest uplink IoT), or a cell with heavy uplink load (for example, a cell with heaviest uplink load). Alternatively, the reference cell may be selected by comprehensively considering information about each neighboring cell. For example, a cell with a small downlink path loss, large uplink load, and a large uplink IoT is selected. For example, the reference cell may be selected by using the formula (4).

S402: The terminal determines the transmit power based on the determined power control parameter.

In this step, the terminal may use the correction parameter calculated in S401 as one of the power control parameters, corrects the downlink path loss of the terminal by using the correction parameter, and further performs uplink power control based on another power control parameter.

The following separately describes an example in which the uplink power control is performed on a PUSCH and an SRS. It is agreed that the cell c is the cell in which the terminal is located.

When uplink power control is performed on the PUSCH of the terminal, if the terminal does not simultaneously transmit the PUSCH and the PUCCH, a transmit power of the PUSCH of the terminal may be determined according to the following formula (in a unit of dBm):

$$P_{PUSCH,c}(i) = \min \left\{ \begin{array}{l} P_{CMAX,c}(i), \\ 10\log_{10}(M_{PUSCH,c}(i)) + P_{O\_PUSCH,c}(j) + \alpha_c(j) \cdot PL_c + \Delta_{TF,c}(i) + f_c(i) \end{array} \right\} \quad [15]$$

where $P_{CMAX,c}(i)$ is a maximum transmit power of each subcarrier in the cell c; $M_{PUSCH,c}(i)$ is a quantity of RBs occupied by the PUSCH in one subframe; $P_{O\_PUSCH,c}(j)$ is obtained by summing two parameters configured by the higher layer; $PL_c$ is a downlink path loss calculated by the terminal, where the downlink path loss is equal to a difference between an RS transmit power of the cell c and an RSRP of the cell c obtained through measurement by the terminal;

$\Delta_{TF,c}(i) = 10\log_{10}\left(\left(2^{BPRE \cdot K_s} - 1\right) \cdot \beta_{offset}^{PUSCH}\right)$, where $K_S$ is configured by the higher layer; $f_c(i)$ is a value configured by the higher layer and is related to $\delta_{PUSCH,c}$, and $\delta_{PUSCH,c}$ is a value related to a TPC command indicated by a PDCCH/EPDCCH; $\alpha_c(j)$ is the path correction parameter of the downlink path loss obtained through calculation by using the method provided in the foregoing embodiment of this application.

If the terminal transmits both the PUSCH and a PUCCH, a transmit power of the PUSCH of the terminal may be determined according to the following formula (in a unit of dBm):

$$P_{\text{PUSCH},c}(i) = \min \left\{ \begin{array}{l} 10\log_{10}\left(\hat{P}_{\text{CMAX},c}(i) - \hat{P}_{\text{PUCCH}}(i)\right), \\ 10\log_{10}(M_{\text{PUSCH},c}(i)) + P_{\text{O\_PUSCH},c}(j) + \alpha_c(j) \cdot PL_c + \Delta_{\text{TF},c}(i) + f_c(i) \end{array} \right\} \quad [16]$$

where $\hat{P}_{\text{PUCCH}}(i)$ is the transmit power of the PUCCH. For other parameters, refer to the descriptions of the parameters in the formula (15).

If the terminal does not transmit the PUSCH, but receives a TPC command in DCI format 3/3A (DCI format 3/3A), the terminal assumes that a transmit power of the PUSCH is as follows (in a unit of dBm):

$$P_{\text{PUSCH},c}(i) = \min\left\{ P_{\text{CMAX},c}(i), P_{\text{O\_PUSCH},c}(1) + \alpha_c(j) \cdot PL_c + f_c(i) \right\} \quad [17]$$

Meanings of some parameters in the formula (17) are the same as meanings of the corresponding parameters in the formula (15), and are not described herein again. $\alpha_c(j)$ is the path correction parameter of the downlink path loss calculated by using the method provided in the foregoing embodiment of this application.

When an uplink power of the SRS of the terminal is controlled, a transmit power of the SRS may be determined according to the following formula (in a unit of dBm):

$$P_{\text{SRS},c}(i) = \min\left\{ P_{\text{CMAX},c}(i), P_{\text{SRS\_OFFSET},c}(m) + 10\log_{10}(M_{\text{SRS},c}) + P_{\text{O\_PUSCH},c}(j) + \alpha_c(j) \cdot PL_c + f_c(i) \right\} \quad [18]$$

where $P_{\text{SRS\_OFFSET},c}(m)$ is a semi-static parameter configured by the higher layer, $M_{\text{SRS},c}$ is a quantity of RBs occupied by the SRS in one subframe, $f_c(i)$ is a power control adjustment (power control adjustment) of the PUSCH. A definition of $P_{\text{O\_PUSCH},c}(j)$ is the same as that in the PUSCH power control formula, and $\alpha_c(j)$ is the path correction parameter of the downlink path loss calculated by using the method provided in the foregoing embodiment of this application.

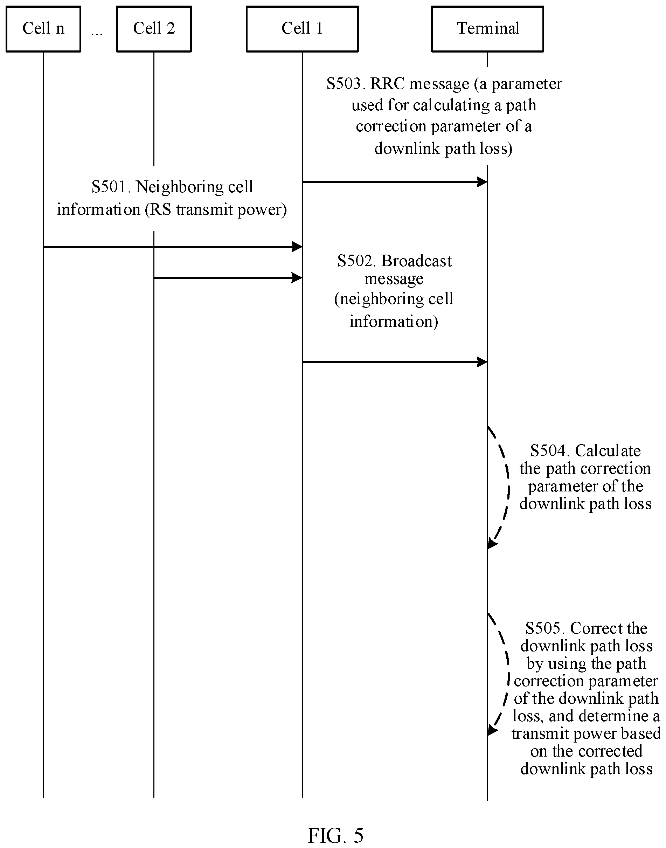

FIG. 5 is a schematic flowchart of signaling interaction according to the uplink power control procedure shown in FIG. 4. In an example, it is agreed that a cell 1 is a cell in which a terminal is located, a cell 2 to a cell n (n is an integer greater than 2) are neighboring cells of the cell 1, and a path correction parameter of a downlink path loss is determined according to the formula (12). As shown in the figure, in S501, a base station to which the cell 2 to the cell n belongs separately sends information (including an RS transmit power) about the cell 2 to cell n to the base station to which the cell 1 belongs. In S502, the base station sends the information (including the RS transmit power) about the cell 2 to cell n to the terminal by using a broadcast message. In S503, the base station configures, to the terminal by using an RRC message, a parameter that is required for calculating the path correction parameter of the downlink path loss. In S504, the terminal measures RSRPs of the cell 2 to the cell n, selects a smallest downlink path loss based on measurement results, and calculates the path correction parameter of the downlink path loss according to the formula (12). In S505, the terminal corrects the downlink path loss between the cell 1 and the terminal based on the calculated correction parameter in S504, to perform uplink power control based on a corrected path loss.

It should be noted that, a time sequence of each step in FIG. 5 is merely an example, and a process of S501 and S502 is relatively independent of a process of S503 and a process of S504 and S505. For example, when the terminal needs to perform the uplink power control, an uplink power control procedure may be performed according to S504 and S505, and a process of S501 and S502 or a process of S503 is not necessarily included when the uplink power control is performed each time.

It can be learned from the foregoing embodiment that the path correction parameter of the downlink path loss is determined based on the neighboring cell information, or further based on the information about the terminal and/or the measurement information of the terminal, and the correction parameter is used to correct the path loss, and the corrected path loss is used for the uplink power control, so that a neighboring cell interference factor is introduced into the uplink power control during the uplink power control. In this way, the uplink power control can be optimized, to reduce uplink interference from the terminal to the neighboring cell.

Solution 2

In an uplink power control procedure provided in Solution 2 (example not being part of the invention), interference from a terminal to a neighboring cell needs to be estimated. The estimation of the interference from the terminal to the neighboring cell may be based on neighboring cell information and further based on at least one of measurement information of the terminal and information about the terminal. The measurement information of the terminal is reported by the terminal to a base station. Content and an interaction manner of the neighboring cell information are the same as those in the foregoing embodiment. Definitions of the measurement information of the terminal and the information about the terminal are the same as those in the foregoing embodiment. The base station may organize the neighboring cell information into a form of a neighboring cell list. The neighboring cell list includes information about one or more neighboring cells. One index is allocated to each neighboring cell, to index information about a corresponding neighboring cell.

In the embodiment provided in Solution 2, a plurality of power control parameter sets may be configured for a same channel or a same signal. Specifically, a plurality of power control parameter sets may be configured for a channel for uplink power control. For example, the channel may include one or more of channels such as a PUCCH, a PUSCH, and a PRACH. A plurality of power control parameter sets may be configured for a signal for uplink power control. Such a signal may include an uplink reference signal such as an SRS.

Because power control algorithms of different channels or different signals may be different, types of power control parameters included in power control parameter sets for different channels or different signals may be different. In the plurality of power control parameter sets for the same channel or the same signal, types of the power control parameters are the same, but values of the power control parameters are different. Therefore, for the same channel or the same signal, using the different power control parameter sets to perform power control can achieve different power control effects. In actual application, corresponding power control parameter sets may be used for uplink power control in different scenarios (for example, whether the terminal is in an air mode or a ground mode, or a degree of uplink interference from the terminal to a neighboring cell).

For example, two power control parameter sets (a set 1 and a set 2) are configured for the PUCCH, and both the set 1 and the set 2 include a power control parameter $P_{O\_PUCCH}$ of the PUCCH, but values of the parameter in the set 1 and the set 2 are different. More specifically, the set 1 is used when the terminal is in an air mode or when interference from the terminal to a neighboring cell is strong, and the set 2 is used when the terminal is in a ground mode or when interference from the terminal to a neighboring cell is weak.

For another example, two power control parameter sets (a set 1 and a set 2) are configured for the PUSCH, and both the set 1 and the set 2 include power control parameters $P_{O\_PUSCH,c}(j)$ and $\alpha_c(j)$ of the PUSCH, but values of at least one of the two parameters in the set 1 and the set 2 are different.

For another example, two power control parameter sets (a set 1 and a set 2) are configured for the SRS, and both the set 1 and the set 2 include power control parameters $P_{O\_PUSCH,c}(j)$ and $\alpha_c(j)$ of the SRS, but values of at least one of the two parameters in the set 1 and the set 2 are different.

For another example, two power control parameter sets (a set 1 and a set 2) are configured for the PRACH. Both the set 1 and the set 2 include a PRACH power control parameter PREAMBLE_RECEIVED_TARGET_POWER, but values of the parameter in the set 1 and the set 2 are different.

Although an example in which two power control parameter sets are configured for the same channel or the same signal is used for the description above, it should be understood that more than two power control parameter sets may be configured for the same channel or the same signal.

The plurality of power control parameter sets configured for the same channel or the same signal may be agreed on in advance. Optionally, the base station may send, to the terminal, the plurality of power control parameter sets configured for the same channel or the same signal. In an example in which the base station sends the plurality of power control parameter sets to the terminal, the base station may configure the power control parameter sets for the terminal by using dedicated signaling or a broadcast message. For example, the base station may send the power control parameter set to the terminal by using an existing RRC message or a newly defined RRC message such as an RRC connection reconfiguration message. Alternatively, the base station may send the power control parameter set to the terminal by using a newly defined system information block (system information block, SIB) message.

In this embodiment of this application, considering that different terminals may be of different types, the base station may also determine, based on a type of the terminal, whether to send the plurality of power control parameter sets to the terminal. Specifically, if determining that the terminal is a terminal of a drone type, the base station sends the plurality of power control parameter sets to the terminal.

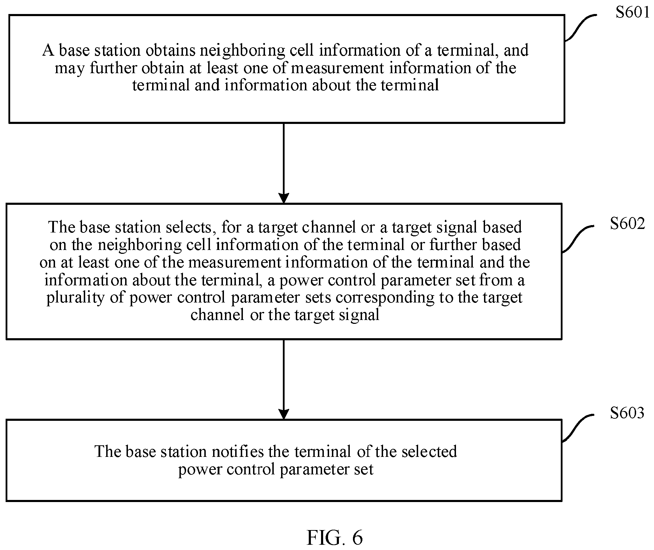

FIG. 6 shows an uplink power control procedure provided in Solution 2 according to an example not being part of the invention. As shown in FIG. 6, when a base station needs to perform uplink power control on a channel or a signal (referred to as a target channel or a target signal below) of a terminal, the base station may perform the following procedure on the terminal for which the uplink power control needs to be performed.

S601: The base station obtains neighboring cell information of the terminal, and may further obtain at least one of measurement information of the terminal and information about the terminal.

S602: The base station selects, for the target channel or the target signal based on the neighboring cell information of the terminal or further based on at least one of the measurement information of the terminal and the information about the terminal, a power control parameter set from a plurality of power control parameter sets for the target channel or the target signal.

In this step, the base station may determine, based on the neighboring cell information of the terminal or further based on at least one of the measurement information of the terminal and the information about the terminal, uplink interference from the terminal to a neighboring cell of the terminal, and selects the power control parameter set based on the uplink interference.

For example, two power control parameter sets (a set 1 and a set 2) are configured for a PUCCH, and both the set 1 and the set 2 include a power control parameter $P_{O\_PUCCH}$, but a value of the parameter in the set 1 is less than a value of the parameter in the set 2. Power control of the PUCCH is implemented in a manner described in the formula (5). When uplink power control is performed on a PUCCH of a terminal, if determining, based on neighboring cell information of the terminal and measurement information reported by the terminal, that interference from the terminal to a neighboring cell is relatively strong, the base station selects the set 1 from the set 1 and the set 2 that correspond to the PUCCH.

In this example, for the terminal for which uplink power control needs to be performed, a plurality of methods may be used to determine, based on the neighboring cell information of the terminal or further based on at least one of the measurement information of the terminal or the information about the terminal, uplink interference from the terminal to the neighboring cell of the terminal. This is not limited in this example. In an example, if a downlink path loss between the neighboring cell and the terminal that is calculated by the terminal based on a measured RSRP of the neighboring cell is less than a specified threshold, and an uplink IoT of the neighboring cell is greater than a specified threshold, it may be determined that the terminal causes large interference to the neighboring cell of the terminal. In another example, an uplink interference metric parameter may be calculated based on the neighboring cell information of the terminal and the measurement information of the terminal. If a value of the parameter is greater than a specified threshold, it may be determined that the terminal causes large interference to the neighboring cell of the terminal. An example of a formula for calculating a metric parameter of uplink interference from the terminal to a neighboring cell M is:

$$\lambda_M = \frac{x \cdot IoT_M + y \cdot Load_M}{z \cdot PL_M} \quad [19]$$

where $\lambda_M$ represents a metric value of the uplink interference from the terminal to the neighboring cell M; $PL_M$ represents a downlink path loss between the neighboring cell M and the terminal; $PL_M = referenceSignalPower_M - RSRP_M$, where $referenceSignalPower_M$ represents an RS transmit power of the neighboring cell M; $RSRP_M$ represents an RSRP of the neighboring cell M obtained through measurement by the terminal; $IoT_m$ represents an uplink interference over thermal noise ratio of the neighboring cell M; $Load_m$ represents uplink load of the neighboring cell M; and X, $y$, and $z$ are specified values; and may be preset or configured by a higher layer, where values of x, y, and z may be greater than or equal to 0.

S603: The base station notifies the terminal of the selected power control parameter set, so that the terminal may determine, based on the notification, a transmit power of the target channel or the target signal by using a power control parameter in the corresponding power control parameter set.

In an example of S603, the base station may send the power control parameter included in the selected power control parameter set to the terminal.

To reduce signaling overheads, in another example of S603, a plurality of power control parameter sets are configured for the terminal for a same channel or a same signal. For example, the plurality of power control parameter sets may be configured in a pre-agreed manner, or may be configured in a sending manner of the base station. In this way, in S603, the base station may notify the terminal of the selected power control parameter set by using indication information. Specifically, the base station may send the indication information to the terminal by using DCI or an RRC message.

The indication information may be an identifier or an index of the power control parameter set. For example, if two power control parameter sets (a set 1 and a set 2) are configured for a PUSCH, and when uplink power control is performed on the PUSCH, the base station may notify, by using 1-bit information, the terminal whether the set 1 or the set 2 is used. For example, when a value of the bit is 0, it indicates that the terminal uses the set 1, or when a value of the bit is 1, it indicates that the terminal uses the set 2.

The indication information may alternatively be a change indication used to instruct the terminal to change a power control parameter set, or instruct the terminal to use a power control parameter set different from a currently used power control parameter set. For example, if two power control parameter sets (a set 1 and a set 2) are configured for a PUSCH, when uplink power control is performed on the PUSCH, the base station may use 1-bit information as the change indication. When a value of the change indication is 0 or the base station does not send the change indication, it indicates that a currently used power control parameter set remains unchanged; or when a value of the change indication is 1, it indicates that the power control parameter set different from the currently used power control parameter set is used. For example, if the terminal currently uses the set 1, and the terminal receives the change indication (a value is 1), the set 2 is used. If the terminal does not receive the change indication or a value of the received change indication is 0, the set 1 is still used.

In the foregoing procedure, based on different used uplink power control algorithms, parameters included in the power control parameter set may also be different. The uplink power control algorithm used in this example is not limited. In an example, an uplink power control algorithm defined in an LTE protocol may be used to set the transmit power in S603. This is not limited in this example.

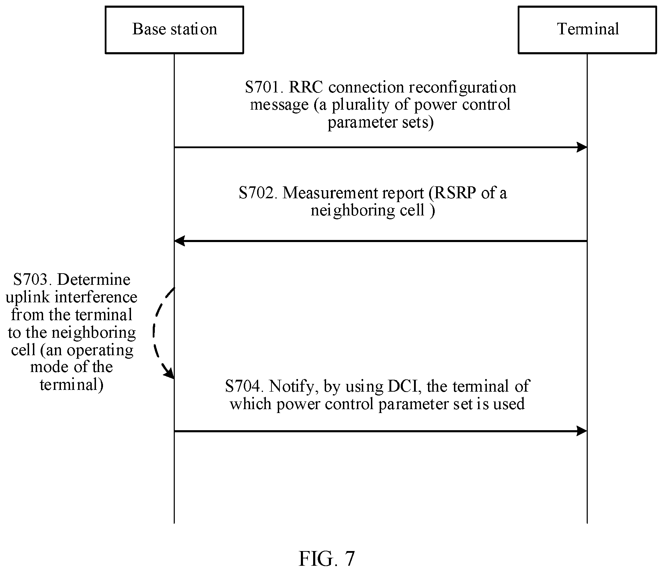

FIG. 7 is a schematic flowchart of signaling interaction according to the uplink power control procedure shown in FIG. 6. As shown in the figure, in S701, a base station sends, to a terminal by using an RRC connection reconfiguration message, two power control parameter sets (a set 1 and a set 2) for the PUCCH. In S702, the terminal reports a measurement report to the base station, where the measurement report includes an RSRP of a neighboring cell measured by the terminal. In S703, the base station determines, based on neighboring cell information of the terminal and the measurement report reported by the terminal, uplink interference from the terminal to a neighboring cell. Because different uplink interference degrees correspond to different operating modes of the terminal (for example, interference to the neighboring cell in an air mode is greater than that in a ground mode), in this step, the operating mode of the terminal may be determined based on the uplink interference from the terminal to the neighboring cell, and the base station selects one set from the set 1 and the set 2 for the terminal based on the uplink interference from the terminal to the neighboring cell or based on the operating mode of the terminal. In S704, the base station sends a notification to the terminal by using DCI, where the notification includes 1-bit indication information, to indicate whether the terminal uses the set 1 or the set 2 to determine a transmit power of the PUCCH.

It should be noted that, a time sequence of each step in FIG. 7 is merely an example, and a process of S701, a process of S702, and a process of S703 and S704 are relatively independent of each other. For example, when the terminal needs to perform the uplink power control, an uplink power control procedure may be performed according to S703 and S704, and a process of S701 and S702 is not necessarily included when the uplink power control is performed each time.

It can be learned from the foregoing description that, because the plurality of power control parameter sets are configured for the same channel or the same signal, the base station selects, based on the neighboring cell information and at least one of the measurement information of the terminal and the information about the terminal, a power control parameter set from the plurality of power control parameter sets for the same channel or the same signal, notifies the terminal of the selected power control parameter set, so that the terminal sets the transmit power based on the power control parameter set, to perform the uplink power control by using different power control parameters in different scenarios (for example, interference from the terminal to a neighboring cell is strong or weak).

Solution 3

In an uplink power control procedure provided in Solution 3, a terminal needs to determine an operating mode of the terminal. For the method for determining the operating mode of the terminal, refer to the description in Solution 1 in this embodiment of this application.

As described in the foregoing embodiment, the operating mode of the terminal may be determined based on one or a combination of information about the terminal, neighboring cell information of the terminal, or measurement information of the terminal. Content and an interaction manner of the neighboring cell information are the same as those in the foregoing embodiment. Definitions of the measurement information of the terminal and the information about the terminal are the same as those in the foregoing embodiment. A neighboring cell list may be formed by using the neighboring cell information, where the neighboring cell list includes information about one or more neighboring cells. One index is allocated to each neighboring cell, to index information about a corresponding neighboring cell.

In the embodiment provided in Solution 3, a plurality of power control parameter sets may be configured for a same channel or a same signal, and different power control parameter sets may correspond different operating modes of the terminal (for example, an air mode or a ground mode). For a definition and a configuration method related to the foregoing, refer to the corresponding description in Solution 2. Details are not described herein again.

The plurality of power control parameter sets configured for the same channel or the same signal may be agreed on in advance, or the plurality of power control parameter sets configured for the same channel or the same signal may be sent to the terminal by the base station. In an example in which the base station sends the plurality of power control parameter sets to the terminal, the base station may configure the power control parameter sets for the terminal by using dedicated signaling (for example, an RRC message) or a broadcast message.

In this embodiment of this application, considering that different terminals may be of different types, the base station may also determine, based on a type of the terminal, whether to send the plurality of power control parameter sets to the terminal. Specifically, if determining that the terminal is a terminal of a drone type, the base station sends the plurality of power control parameter sets to the terminal.

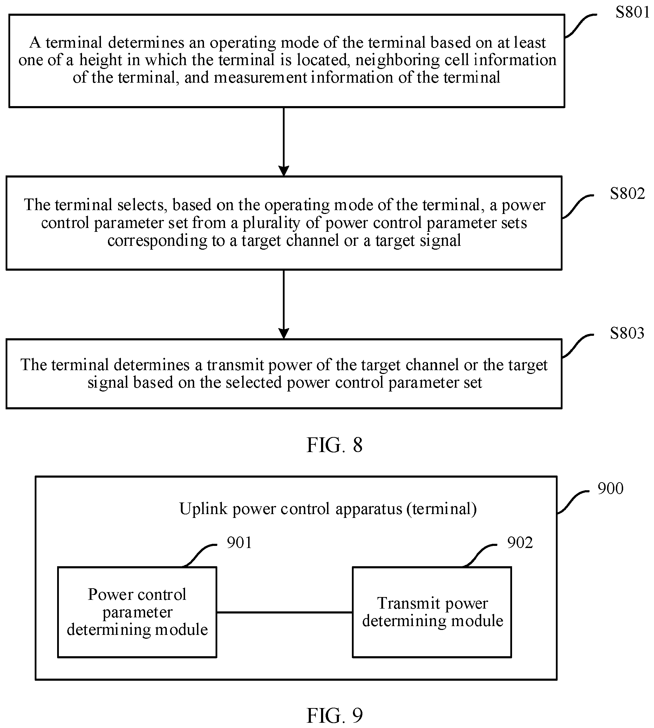

FIG. 8 is a schematic diagram of an uplink power control procedure provided in Solution 3 according to an example not being part of the invention. As shown in FIG. 8, when performing uplink power control, a terminal may perform the following procedure.

S801: The terminal determines an operating mode of the terminal based on at least one of a height in which the terminal is located, neighboring cell information of the terminal, and measurement information of the terminal.

For the method for determining the operating mode of the terminal, refer to the description in the foregoing embodiment, and no repeated description is given herein again.

S802: The terminal selects, based on the operating mode of the terminal, a power control parameter set from a plurality of power control parameter sets for a target channel or a target signal.

In this step, a plurality of power control parameter sets for a same channel or a same signal may correspond to different operating modes. Therefore, a power control parameter set matching a current operating mode of the terminal is selected, based on the operating mode of the terminal, from the plurality of power control parameter sets for the same channel or the same signal, thereby better reducing uplink interference from the terminal to a neighboring cell.

S803: The terminal determines a transmit power of the target channel or the target signal based on the selected power control parameter set.

In the foregoing procedure, based on different used uplink power control algorithms, parameters included in the power control parameter set may also be different. The uplink power control algorithm used in this example is not limited. In an example, an uplink power control algorithm defined in an LTE protocol may be used to set the transmit power in S803. This is not limited in this example.

It can be learned from the foregoing description that, because the plurality of power control parameter sets are configured for the same channel or the same signal, different sets correspond to different operating modes, in other words, different sets are applicable to different operating modes. The terminal may select an appropriate power control parameter set after the operating mode is selected, so that the uplink power control is performed.

The foregoing mainly describes the solutions provided in the embodiments of this application from a perspective of interaction between the terminal and the network device. It may be understood that to implement the foregoing functions, the terminal and the network device include corresponding hardware structures and/or software modules for performing the functions. In combination with the examples of units (device or component) and algorithm steps described in the embodiments disclosed in this application, the embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, functional unit (device or component) division may be performed on the terminal and the network device based on the foregoing method examples. For example, each functional unit (device or component) may be divided corresponding to each function, or at least two of the foregoing functions may be integrated into one processing unit (device or component). The integrated unit (device or component) may be implemented in a form of hardware, or may be implemented in a form of a software functional unit (device or component). It should be noted that the unit (device or component) division in the embodiments of this application is an example, and is merely logical function division. There may be another division manner in actual implementation.

When an integrated unit (device or component) is used, FIG. 9 is a schematic structural diagram of an uplink power control apparatus according to an embodiment of this application. The uplink power control apparatus may be applied to a terminal. Referring to FIG. 9, the uplink power control apparatus 900 includes a power control parameter determining module 901 and a transmit power determining module 902, and may further include a receiving module (not shown in the figure). The power control parameter determining module 901 is configured to determine a power control parameter, where the power control parameter includes an interference impact parameter or a path correction parameter of a downlink path loss, the path correction parameter of the downlink path loss is used to correct a downlink path loss participating in calculation of a transmit power, where the interference impact parameter and the path correction parameter of the downlink path loss are determined and obtained based on neighboring cell information of the terminal. A transmit power determining module 902 is configured to determine the transmit power based on the determined power control parameter.

In a possible implementation, the power control parameter determining module 901 is configured to determine the interference impact parameter or the path correction parameter of the downlink path loss in the following manner: determining a downlink path loss between a first neighboring cell and the terminal based on a reference signal transmit power of the first neighboring cell and a reference signal received strength of the first neighboring cell obtained through measurement by the terminal, where the first neighboring cell is one of neighboring cells of the terminal; and determining the interference impact parameter or the path correction parameter of the downlink path loss based on the downlink path loss between the first neighboring cell and the terminal or based on the downlink path loss between the first neighboring cell and the terminal and neighboring cell information of the first neighboring cell. The first neighboring cell is indicated by a network side, or is selected by the terminal from the neighboring cells of the terminal, and the first neighboring cell is a cell that receives strong uplink interference among the neighboring cells of the terminal.

For the specific method for calculating the interference impact parameter and the path correction parameter of the downlink path loss, refer to the description in the foregoing embodiment.

In a possible implementation, the neighboring cell information includes some or all of the following information: a downlink path loss between the neighboring cell and the terminal, an uplink interference over thermal noise ratio of the neighboring cell, and uplink load of the neighboring cell. For content included in the neighboring cell information, refer to the description in the foregoing embodiment.

In a possible implementation, when the power control parameter includes the interference impact parameter, the transmit determining module 902 is specifically configured to determine the transmit power based on the interference impact parameter, the downlink path loss, and a parameter configured by the network side; or when the power control parameter includes the path correction parameter of the downlink path loss, the transmit power determining module 902 is specifically configured to: correct, based on the path correction parameter of the downlink path loss, the downlink path loss participating in calculation of the transmit power, and determine the transmit power based on the corrected downlink path loss and a parameter configured by the network side.

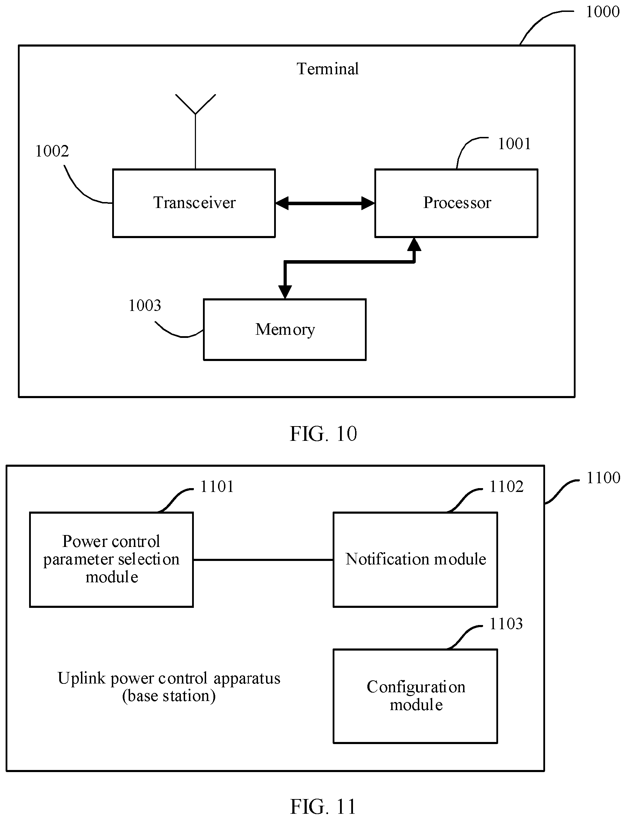

FIG. 10 is a schematic structural diagram of a terminal 1000 according to an embodiment of this application. To be specific, FIG. 10 is another schematic structural diagram of an uplink power control apparatus 900. As shown in FIG. 10, the terminal 1000 includes a processor 1001 and a transceiver 1002. The processor 1001 may be alternatively a controller. The processor 1001 is configured to support the terminal in performing a function related in FIG. 2. The transceiver 1002 is configured to support a function of receiving and sending a message by the terminal. The terminal 1000 may further include a memory 1003. The memory 1003 is coupled to the processor 1001 and configured to store a program instruction and data that are necessary for the terminal. The processor 1001, the transceiver 1002, and the memory 1003 are connected. The memory 1003 is configured to store an instruction. The processor 1001 is configured to execute the instruction stored in the memory 1003, to control the transceiver 1002 to receive and send a signal, and to complete the steps of the corresponding functions performed by the terminal in the foregoing method.

In this embodiment of this application, for concepts, explanations, detailed description, and other steps that are related to the uplink power control apparatus 900 and the terminal 1000 and related to the technical solutions provided in the embodiments of this application, refer to the description about the content in the foregoing method embodiments or other embodiments. Details are not described herein again.

When an integrated unit (device or component) is used, FIG. 11 is a schematic structural diagram of an uplink power control apparatus according to an example not being part of the invention. The uplink power control apparatus may be applied to a network device. Referring to FIG. 11, the uplink power control apparatus 1100 includes a power control parameter selection module 1101 and a notification module 1102. The power control parameter selection module 1101 is configured to select a power control parameter set from a plurality of power control parameter sets, where the power control parameter set is selected based on neighboring cell information of a terminal and at least one of measurement information of the terminal and information about the terminal, and the plurality of power control parameter sets are a plurality of power control parameter sets for a same channel or a same signal. The notification module 1102 is configured to notify the terminal of the selected power control parameter set. In the plurality of power control parameter sets for the same channel or the same signal, types of the power control parameters are the same, but values of the power control parameters in different sets are different. For content included in the neighboring cell information, refer to the foregoing embodiment.

In a possible implementation, the notification module 1102 may send an index of the selected power control parameter set to the terminal, or send a change indication to the terminal, where the change indication is used to instruct the terminal to change the power control parameter set.

In a possible implementation, the uplink power control apparatus 1100 further includes a configuration module 1103, configured to send, to the terminal by using dedicated signaling or a broadcast message, the plurality of power control parameter sets for the same channel or the same signal.

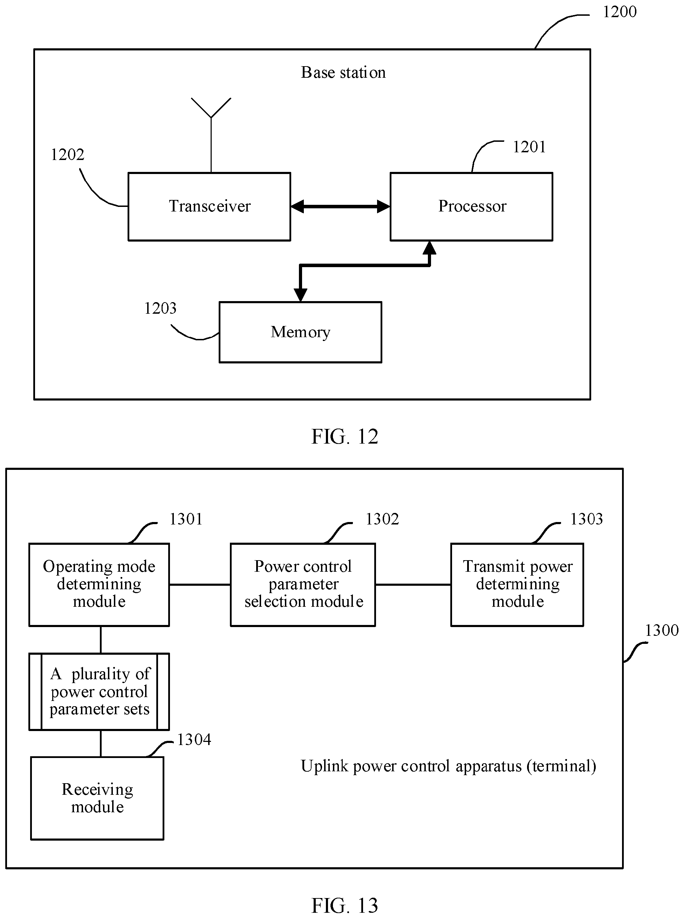

FIG. 12 is a schematic structural diagram of a base station 1200 according to an example not being part of the invention. To be specific, FIG. 12 is another schematic structural diagram of an uplink power control apparatus 1100. As shown in FIG. 12, the base station 1200 includes a processor 1201 and a transceiver 1202. The processor 1201 may be alternatively a controller. The processor 1201 is configured to support the network device in performing a function related in FIG. 4. The transceiver 1202 is configured to support a function of receiving and sending a message by the network device. The base station 1200 may further include a memory 1203. The memory 1203 is coupled to the processor 1201 and configured to store a program instruction and data that are necessary for the network device. The processor 1201, the transceiver 1202, and the memory 1203 are connected. The memory 1203 is configured to store an instruction. The processor 1201 is configured to execute the instruction stored in the memory 1203, to control the transceiver 1002 to receive and send a signal, and to complete the steps of the corresponding functions performed by the network device in the foregoing method.

In this example, for concepts, explanations, detailed description, and other steps that are related to the uplink power control apparatus 1100 and the base station 1200 and related to the technical solutions provided in the embodiments of this application, refer to the description about the content in the foregoing method embodiments or other embodiments. Details are not described herein again.

When an integrated unit (device or component) is used, FIG. 13 is a schematic structural diagram of an uplink power control apparatus according to an example not being part of the invention. The uplink power control apparatus may be applied to a terminal. Referring to FIG. 13, the uplink power control apparatus 1300 includes an operating mode determining module 1301, a power control parameter selection module 1302, and a transmit power determining module 1303. The operating mode determining module 1301 is configured to determine an operating mode of the terminal based on at least one of information about the terminal, neighboring cell information of the terminal, and measurement information of the terminal. The operating mode includes a corresponding operating mode of the terminal during air communication and a corresponding operating mode of the terminal during ground communication. The power control parameter selection module 1302 is configured to select, based on the operating mode of the terminal, a power control parameter set from a plurality of power control parameter sets for a target channel or a target signal. The transmit power determining module 1303 is configured to determine a transmit power of the target channel or the target signal based on the selected power control parameter set. In the plurality of power control parameter sets for the same channel or the same signal, types of the power control parameters are the same, but values of the power control parameters in different sets are different.

In a possible implementation, the uplink power control apparatus 1300 further includes a receiving module 1304, configured to receive the plurality of power control parameter sets sent by the base station by using dedicated signaling or a broadcast message.

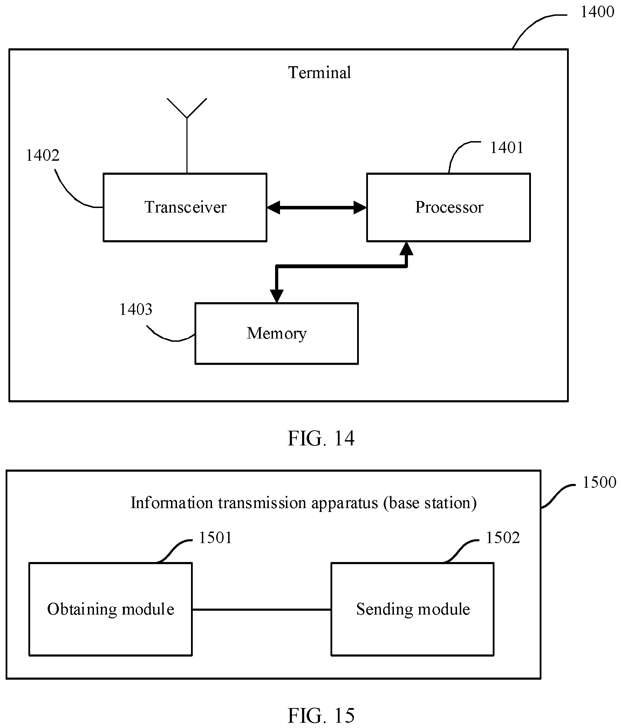

FIG. 14 is a schematic structural diagram of a terminal 1400 according to an example not being part of the invention. To be specific, FIG. 14 is another schematic structural diagram of an uplink power control apparatus 1300. As shown in FIG. 14, the terminal 1400 includes a processor 1401 and a transceiver 1402. The processor 1401 may be alternatively a controller. The processor 1401 is configured to support the terminal in performing a function related in FIG. 2. The transceiver 1402 is configured to support a function of receiving and sending a message by the terminal. The terminal 1400 may further include a memory 1403. The memory 1403 is coupled to the processor 1401 and configured to store a program instruction and data that are necessary for the terminal. The processor 1401, the transceiver 1402, and the memory 1403 are connected. The memory 1403 is configured to store an instruction. The processor 1401 is configured to execute the instruction stored in the memory 1403, to control the transceiver 1402 to receive and send a signal, and to complete the steps of the corresponding functions performed by the terminal in the foregoing method.

In this example, for concepts, explanations, detailed description, and other steps that are related to the uplink power control apparatus 1300 and the terminal 1400 and related to the technical solutions provided in the embodiments of this application, refer to the description about the content in the foregoing method embodiments or other embodiments. Details are not described herein again.

When an integrated unit (device or component) is used, FIG. 15 is a schematic structural diagram of an information transmission apparatus according to an example not being part of the invention. The information transmission apparatus may be applied to a base station. Referring to FIG. 15, the information transmission apparatus 1500 includes an obtaining module 1501 and a sending module 1502. The obtaining module 1501 is configured to obtain neighboring cell information of a first terminal. The sending module 1502 is configured to send the neighboring cell information of the first terminal to the first terminal. For content included in the neighboring cell information, refer to the foregoing embodiment.

In a possible implementation, the obtaining module 1501 may obtain neighboring cell information of neighboring cells of a cell in which the first terminal is located within a coverage area of the base station; and/or receive neighboring cell information, of neighboring cells of a cell in which the first terminal is located, sent by a neighboring base station.

In a possible implementation, the sending module 1502 may send the neighboring cell information of the first terminal to the first terminal by using dedicated signaling or a broadcast message.

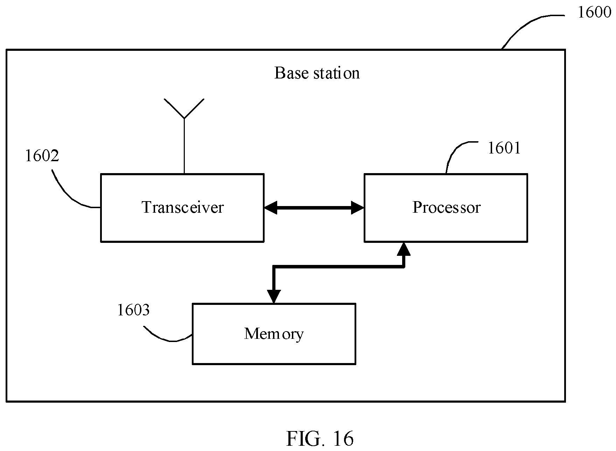

FIG. 16 is a schematic structural diagram of a base station 1600 according to an embodiment of this application. To be specific, FIG. 16 is another schematic structural diagram of an information transmission apparatus 1500. As shown in FIG. 16, the base station 1600 includes a processor 1601 and a transceiver 1602. The processor 1601 may be alternatively a controller. The processor 1601 is configured to support the base station in performing a function of sending the neighboring cell information described in the foregoing embodiment. The transceiver 1602 is configured to support a function of receiving and sending a message by the base station. The base station 1600 may further include a memory 1603. The memory 1603 is configured to be coupled to the processor 1601 and store a program instruction and data that are necessary for the terminal. The processor 1601, the transceiver 1602, and the memory 1603 are connected. The memory 1603 is configured to store an instruction. The processor 1601 is configured to execute the instruction stored in the memory 1603, to control the transceiver 1602 to receive and send a signal, and to complete the steps of the corresponding functions performed by the base station in the foregoing method.

In this embodiment of this application, for concepts, explanations, detailed description, and other steps that are related to the information transmission apparatus 1500 and the base station 1600 and related to the technical solutions provided in the embodiments of this application, refer to the description about the content in the foregoing method embodiments or other embodiments. Details are not described herein again.

It may be understood that, in the accompanying drawings of the embodiments of this application, only simplified designs of the network device and the terminal are shown. In actual application, the network device and the terminal are not limited to the foregoing structures. For example, an antenna array, a duplexer, and a baseband processing part may be further included.

The duplexer of the network device is configured to implement an antenna array, and is configured to send a signal and receive a signal. The transmitter is configured to implement conversion between a radio frequency signal and a baseband signal. The transmitter may usually include a power amplifier, a digital-to-analog converter, and a frequency converter, and the receiver may usually include a low-noise amplifier, an analog-to-digital converter, and a frequency converter. The receiver and the transmitter may be collectively referred to as a transceiver on some occasions. The baseband processing part is configured to process a sent or received signal, for example, layer mapping, precoding, modulation/demodulation, and encoding/decoding, and separately process a physical control channel, a physical data channel, a physical broadcast channel, a reference signal, and the like. For another example, the terminal may further include a display device, an input/output interface, and the like.

The terminal may have a single antenna, or a plurality of antennas (in other words, an antenna array). The duplexer of the terminal is configured to implement an antenna array, and is configured to send a signal and receive a signal. The transmitter is configured to implement conversion between a radio frequency signal and a baseband signal. The transmitter may usually include a power amplifier, a digital-to-analog converter, and a frequency converter, and the receiver may usually include a low-noise amplifier, an analog-to-digital converter, and a frequency converter. The baseband processing part is configured to process a sent or received signal, for example, layer mapping, precoding, modulation/demodulation, and encoding/decoding, and separately process a physical control channel, a physical data channel, a physical broadcast channel, a reference signal, and the like. In an example, the terminal may also include a control part, configured to request an uplink physical resource, calculate channel state information (Channel State Information, CSI) corresponding to a downlink channel, determine whether a downlink data packet is successfully received, and the like.

It should be noted that the foregoing related processor in the embodiments of this application may be a central processing unit (Central Processing Unit, CPU), a general-purpose processor, a digital signal processor (Digital Signal Processing, DSP), an application-specific integrated circuit (Application-Specific Integrated Circuit, ASIC), a field programmable gate array (Field Programmable Gate Array, FPGA), or another programmable logic device, a transistor logic device, a hardware component, or a combination thereof. The processor 1202 may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor, and or the like.

The memory may be integrated into the processor, or may be separately disposed with the processor.

In an implementation, functions of the receiver and the transmitter may be considered to be implemented by using a transceiver circuit or a dedicated transceiver chip. It may be considered that the processor may be implemented by using a dedicated processing chip, a processing circuit, a processor, or a general-purpose chip.

In another implementation, program code that is used to implement functions of the processor, the receiver, and the transmitter is stored in the memory. A general purpose processor implements the functions of the processor, the receiver, and the transmitter by executing the code in the memory.

According to the method provided in the embodiments of this application, an embodiment of this application further provides a communications system, including the foregoing network device and one or more terminals.

An embodiment of this application further provides a computer storage medium, configured to store some instructions. When the instructions are executed, any method related to the foregoing terminal or network device may be completed.

An embodiment of this application further provides a computer program product, configured to store a computer program. The computer program is used to perform the method for uplink power control method in the foregoing method embodiments.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer usable storage media (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may alternatively be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the other programmable device provide steps for implementing a specific function in one or more processes in the flowcharts and/or in one or more blocks in the block diagrams.

**Claims**

1. An uplink power control method, comprising:

   determining(S201;S304;S401;S504), by a terminal, a power control parameter, wherein the power control parameter comprises an interference impact parameter or a path correction parameter of a downlink path loss, the path correction parameter of the downlink path loss is used to correct a downlink path loss participating in calculation of a transmit power, the interference impact parameter and the path correction parameter of the downlink path loss are determined and obtained based on neighboring cell information of the terminal, and the neighboring cell information comprises some or all of the following information: a reference signal transmit power of a neighboring cell, an uplink interference over thermal noise ratio of the neighboring cell, and uplink load of the neighboring cell; and
   determining(S202;S305;S402;S505), by the terminal, the transmit power based on the determined power control parameter,
   wherein the process of determining the interference impact parameter or the path correction parameter of the downlink path loss comprises:

      determining a downlink path loss between a first neighboring cell and the terminal based on a reference signal transmit power of the first neighboring cell and a reference signal received strength of the first neighboring cell obtained through measurement by the terminal, wherein the first neighboring cell is one of neighboring cells of the terminal; and
      determining the interference impact parameter or the path correction parameter of the downlink path loss based on the downlink path loss between the first neighboring cell and the terminal or based on the downlink path loss between the first neighboring cell and the terminal and neighboring cell information of the first neighboring cell;

      and **characterized in that**
      the interference impact parameter is determined and obtained according to a first formula or a second formula:

         the first formula is:

$$\beta_c = \theta \cdot \frac{x \cdot IoT_M + y \cdot Load_M}{z \cdot PL_M},$$

and
the second formula is:

$$\beta_c = \theta \cdot \frac{Load_M}{PL_M};$$

or

the path correction parameter of the downlink path loss is determined and obtained according to a third formula, a fourth formula, or a fifth formula:

the third formula is:

$$\alpha_c = \alpha - \frac{\gamma}{PL_M},$$

the fourth formula is:

$$\alpha_c = \alpha - \gamma \cdot \frac{x \cdot IoT_M + y \cdot Load_M}{z \cdot PL_M},$$

and
the fifth formula is:

$$\alpha_c = \alpha - \gamma \cdot \frac{Load_M}{PL_M},$$

wherein
$\beta_c$ represents the interference impact parameter, $\alpha_c(j)$ represents a path correction parameter of an downlink path loss, $PL_M$ represents a downlink path loss between a cell M and the terminal, $IoT_m$ represents an uplink interference over thermal noise ratio of the cell M, $Load_m$ represents uplink load of the cell M, and $\theta$, $\alpha$, $\gamma$, $x$, $y$, and $z$ are specified values; and the cell M is the first neighboring cell.

2. The method according to claim 1, wherein the first neighboring cell is indicated by a network side, or is selected by the terminal from the neighboring cells of the terminal, and the first neighboring cell is a cell that receives strong uplink interference among the neighboring cells of the terminal.

3. The method according to any one of claims 1 to 2, wherein when the power control parameter comprises the interference impact parameter, the determining, by the terminal, the transmit power based on the determined power control parameter comprises: determining, by the terminal, the transmit power based on the interference impact parameter, the downlink path loss participating in calculation of the transmit power, and a parameter configured by the network side; or
when the power control parameter comprises the path correction parameter of the downlink path loss, the determining, by the terminal, the transmit power based on the determined power control parameter comprises: correcting, by the terminal based on the path correction parameter of the downlink path loss, the downlink path loss participating in calculation of the transmit power, and determining the transmit power based on the corrected downlink path loss and a parameter configured by the network side.

4. The method according to any one of claims 1 to 3, further comprising:
receiving, by the terminal by using dedicated signaling or a broadcast message, neighboring cell information sent by a base station.

5. An uplink power control apparatus(900), comprising:

a power control parameter determining module(901), configured to determine a power control parameter, wherein the power control parameter comprises an interference impact parameter or a path correction parameter of a downlink path loss, the path correction parameter of the downlink path loss is used to correct a downlink path loss participating in calculation of a transmit power, the interference impact parameter and the path correction parameter of the downlink path loss are determined and obtained based on neighboring cell information of the terminal, and the neighboring cell information comprises some or all of the following information: a reference signal transmit power of a neighboring cell, an uplink interference over thermal noise ratio of the neighboring cell, and uplink load of the neighboring cell; and
a transmit power determining module(902), configured to determine the transmit power based on the determined power control parameter,
wherein the power control parameter determining module is configured to determine the interference impact parameter and the path correction parameter of the downlink path loss in the following manner:

determining a downlink path loss between a first neighboring cell and the terminal based on a reference signal transmit power of the first neighboring cell and a reference signal received strength of the first neighboring cell obtained through measurement by the terminal, wherein the first neighboring cell is one of neighboring cells of the terminal; and
determining the interference impact parameter or the path correction parameter of the downlink path loss based on the downlink path loss between the first neighboring cell and the terminal or based on the downlink path loss between the first neighboring cell and the terminal and neighboring cell information of the first neighboring cell;

and **characterized in that**
the power control parameter determining module is configured to determine the interference impact parameter according to a first formula or a second formula:

the first formula is:

$$\beta_c = \theta \cdot \frac{x \cdot IoT_M + y \cdot Load_M}{z \cdot PL_M},$$

and
the second formula is:

$$\beta_c = \theta \cdot \frac{Load_M}{PL_M};$$

or
the power control parameter determining module is configured to determine the path correction parameter of the downlink path loss according to
a third formula, a fourth formula, or a fifth formula:

the third formula is:

$$\alpha_c = \alpha - \gamma / PL_M,$$

the fourth formula is:

$$\alpha_c = \alpha - \gamma \cdot \frac{x \cdot IoT_M + y \cdot Load_M}{z \cdot PL_M},$$

and
the fifth formula is:

$$\alpha_c = \alpha - \gamma \cdot \frac{Load_M}{PL_M},$$

wherein

$\beta_c$ represents the interference impact parameter, $\alpha_c(j)$ represents a path correction parameter of an downlink path loss, $PL_M$ represents a downlink path loss between a cell M and the terminal, $IoT_m$ represents an uplink interference over thermal noise ratio of the cell M, $Load_m$ represents uplink load of the cell M, and $\theta$, $\alpha$, $\gamma$, $\chi$, $y$, and $z$ are specified values; and the cell M is the first neighboring cell.

6. The apparatus according to claim 5, wherein the first neighboring cell is indicated by a network side, or is selected by the terminal from the neighboring cells of the terminal, and the first neighboring cell is a cell that receives strong uplink interference among the neighboring cells of the terminal.

7. The apparatus according to any one of claims 5 to 6, wherein the transmit power determining module is configured to:

when the power control parameter comprises the interference impact parameter, determine the transmit power based on the interference impact parameter, the downlink path loss participating in calculation of the transmit power, and a parameter configured by the network side; or
when the power control parameter comprises the path correction parameter of the downlink path loss, correct, based on the path correction parameter of the downlink path loss, the downlink path loss participating in calculation of the transmit power, and determine the transmit power based on the corrected downlink path loss and a parameter configured by the network side.

8. The apparatus according to any one of claims 5 to 7, further comprising:
a receiving module, configured to receive, by using dedicated signaling or a broadcast message, neighboring cell information sent by a base station.

**Patentansprüche**

1. Verfahren zur Steuerung der Uplink-Leistung, umfassend:

das Bestimmen (S201, S304, S401, S504), durch eine Endeinrichtung, eines Leistungssteuerparameters, wobei der Leistungssteuerparameter einen Störungseinflussparameter oder einen Streckenkorrekturparameter einer Downlink-Streckendämpfung umfasst, wobei der Streckenkorrekturparameter der Downlink-Streckendämpfung verwendet wird, um eine Downlink-Streckendämpfung zu korrigieren, die an einer Berechnung einer Übermittlungsleistung beteiligt ist, wobei der Störungseinflussparameter und der Streckenkorrekturparameter auf Grundlage von Nachbarzelleninformationen der Endeinrichtung bestimmt und erlangt werden, und wobei die Nachbarzelleninformationen einige oder alle der folgenden Informationen umfassen: eine Referenzsignalübermittlungsleistung einer Nachbarzelle, ein Verhältnis von Uplink-Störung zu thermischem Rauschen der Nachbarzelle und eine Uplink-Last der Nachbarzelle, und
das Bestimmen (S202, S305, S402, S505), durch die Endeinrichtung, der Übermittlungsleistung auf Grundlage der bestimmten Leistungssteuerparameter,
wobei der Prozess des Bestimmens der Störungseinflussparameter oder der Streckenkorrekturparameter der Downlink-Streckendämpfung Folgendes umfasst:

das Bestimmen einer Downlink-Streckendämpfung zwischen einer ersten Nachbarzelle und der Endeinrichtung auf Grundlage einer Referenzsignalübermittlungsleistung der ersten Nachbarzelle und einer empfangenen Stärke des Referenzsignals der ersten Nachbarzelle, das durch die Messung durch die Endeinrichtung erlangt wurde, wobei die erste Nachbarzelle eine der Nachbarzellen der Endeinrichtung ist, und

das Bestimmen der Störungseinflussparameter oder der Streckenkorrekturparameter der Downlink-Streckendämpfung auf Grundlage der Downlink-Streckendämpfung zwischen der ersten Nachbarzelle und der Endeinrichtung oder auf Grundlage der Downlink-Streckendämpfung zwischen der ersten Nachbarzelle und der Endeinrichtung und Nachbarzelleninformationen der ersten Nachbarzelle,

und **dadurch gekennzeichnet, dass**
der Störungseinflussparameter gemäß einer ersten Formel oder einer zweiten Formel bestimmt und erlangt wird:

die erste Formel lautet:

$$\beta_c = \theta \cdot \frac{x \cdot IoT_M + y \cdot Last_M}{z \cdot PL_M},$$

und
die zweite Formel lautet:

$$\beta_c = \theta \cdot \frac{Last_M}{PL_M};$$

oder
der Streckenkorrekturparameter der Downlink-Streckendämpfung gemäß einer dritten Formel, einer vierten Formel oder einer fünften Formel bestimmt und erlangt wird;

die dritte Formel lautet:

$$\alpha_c = \alpha - \gamma / PL_M,$$

die vierte Formel lautet:

$$\alpha_c = \alpha - \gamma \cdot \frac{x \cdot IoT_M + y \cdot Last_M}{z \cdot PL_M},$$

und
die fünfte Formel lautet:

$$\alpha_c = \alpha - \gamma \cdot \frac{Last_M}{PL_M},$$

wobei
$\beta_c$ den Störungseinflussparameter darstellt, $\alpha_c(j)$ einen Streckenkorrekturparameter einer Downlink-Streckendämpfung darstellt, $PL_M$ eine Downlink-Streckendämpfung zwischen einer Zelle M und der Endeinrichtung darstellt, $IoT_m$ Verhältnis von Uplink-Störung zu thermischem Rauschen der Zelle M darstellt, $Last_m$ eine Uplink-Belastung der Zelle M darstellt, und $\theta$, $\alpha$, $\gamma$, *x*, *y* und *z* festgelegte Werte sind, und die Zelle M die erste Nachbarzelle ist.

2. Verfahren nach Anspruch 1, wobei die erste Nachbarzelle durch eine Netzwerkseite angezeigt ist oder durch die Endeinrichtung aus den Nachbarzellen der Endeinrichtung ausgewählt ist, und die erste Nachbarzelle eine Zelle ist, die eine starke Uplink-Störung unter den Nachbarzellen der Endeinrichtung empfängt.

**3.** Verfahren nach einem der Ansprüche 1 bis 2, wobei, wenn der Leistungssteuerparameter den Störungseinflussparameter umfasst, das Bestimmen, durch die Endeinrichtung, der Übermittlungsleistung auf Grundlage des bestimmten Leistungssteuerparameters Folgendes umfasst: das Bestimmen, durch die Endeinrichtung, der Übermittlungsleistung auf Grundlage des Störungseinflussparameters, der Downlink-Streckendämpfung, die an der Berechnung der Übermittlungsleistung beteiligt ist, und eines Parameters, der durch die Netzwerkseite konfiguriert ist, oder wenn der Leistungssteuerparameter den Streckenkorrekturparameter der Downlink-Streckendämpfung umfasst, das Bestimmen, durch die Endeinrichtung, der Übermittlungsleistung auf Grundlage des bestimmten Leistungssteuerparameters Folgendes umfasst: das Korrigieren, durch die Endeinrichtung, auf Grundlage des Streckenkorrekturparameters der Downlink-Streckendämpfung, der Downlink-Streckendämpfung, die an der Berechnung der Übermittlungsleistung beteiligt ist, und das Bestimmen der Übermittlungsleistung auf Grundlage der korrigierten Downlink-Streckendämpfung und eines Parameters, der durch die Netzwerkseite konfiguriert ist.

**4.** Verfahren nach einem der Ansprüche 1 bis 3, ferner umfassend:
das Empfangen, durch die Endeinrichtung, unter Verwendung von dediziertem Signalisieren oder einer Übertragungsmitteilung, von Nachbarzelleninformationen, die durch eine Basisstation gesendet wurden.

**5.** Uplink-Leistungssteuereinrichtung (900), umfassend:

ein Leistungssteuerparameterbestimmungsmodul (901), das dazu konfiguriert ist, einen Leistungssteuerparameter zu bestimmen, wobei der Leistungssteuerparameter einen Störungseinflussparameter oder einen Streckenkorrekturparameter einer Downlink-Streckendämpfung umfasst, wobei der Streckenkorrekturparameter der Downlink-Streckendämpfung verwendet wird, um eine Downlink-Streckendämpfung zu korrigieren, die an einer Berechnung der Übermittlungsleistung beteiligt ist, wobei der Störungseinflussparameter und der Streckenkorrekturparameter auf Grundlage von Nachbarzelleninformationen der Endeinrichtung bestimmt und erlangt werden, und wobei die Nachbarzelleninformationen einige oder alle der folgenden Informationen umfassen: eine Referenzsignalübermittlungsleistung einer Nachbarzelle, ein Verhältnis von Uplink-Störung zu thermischem Rauschen der Nachbarzelle und eine Uplink-Last der Nachbarzelle, und
ein Übermittlungsleistungsbestimmungsmodul (902), das dazu konfiguriert ist, die Übermittlungsleistung auf Grundlage des bestimmten Leistungssteuerparameters zu bestimmen,
wobei das Leistungssteuerparameterbestimmungsmodul dazu konfiguriert ist, den Störungseinflussparameter und den Streckenkorrekturparameter der Downlink-Streckendämpfung auf folgende Weise zu bestimmen:

das Bestimmen einer Downlink-Streckendämpfung zwischen einer ersten Nachbarzelle und der Endeinrichtung auf Grundlage einer Referenzsignalübermittlungsleistung der ersten Nachbarzelle und einer empfangenen Stärke des Referenzsignals der ersten Nachbarzelle, das durch die Messung durch die Endeinrichtung erlangt wurde, wobei die erste Nachbarzelle eine der Nachbarzellen der Endeinrichtung ist, und das Bestimmen der Störungseinflussparameter oder der Streckenkorrekturparameter der Downlink-Streckendämpfung auf Grundlage der Downlink-Streckendämpfung zwischen der ersten Nachbarzelle und der Endeinrichtung oder auf Grundlage der Downlink-Streckendämpfung zwischen der ersten Nachbarzelle und der Endeinrichtung und Nachbarzelleninformationen der ersten Nachbarzelle,

und **dadurch gekennzeichnet, dass**
das Leistungssteuerparameterbestimmungsmodul dazu konfiguriert ist, den Störungseinflussparameter gemäß einer ersten Formel oder einer zweiten Formel zu bestimmen:

die erste Formel lautet:

$$\beta_c = \theta \cdot \frac{x \cdot IoT_M + y \cdot Last_M}{z \cdot PL_M},$$

und
die zweite Formel lautet:

$$\beta_c = \theta \cdot \frac{Last_M}{PL_M} \; ;$$

oder

das Leistungssteuerparameterbestimmungsmodul dazu konfiguriert ist, den Streckenkorrekturparameter der Downlink-Streckendämpfung gemäß einer dritten Formel, einer vierten Formel oder einer fünften Formel zu bestimmen:

die dritte Formel lautet:

$$\alpha_c = \alpha - \gamma / PL_M \, ,$$

die vierte Formel lautet:

$$\alpha_c = \alpha - \gamma \cdot \frac{x \cdot IoT_M + y \cdot Last_M}{z \cdot PL_M} \, ,$$

und
die fünfte Formel lautet:

$$\alpha_c = \alpha - \gamma \cdot \frac{Last_M}{PL_M} \, ,$$

wobei
$\beta_c$ den Störungseinflussparameter darstellt, $\alpha_c(j)$ einen Streckenkorrekturparameter einer Downlink-Streckendämpfung darstellt, $PL_M$ eine Downlink-Streckendämpfung zwischen einer Zelle M und der Endeinrichtung darstellt, $IoT_m$ Verhältnis von Uplink-Störung zu thermischem Rauschen der Zelle M darstellt, $Last_m$ eine Uplink-Belastung der Zelle M darstellt, und $\theta$, $\alpha$, $\gamma$, *x*, y und *z* festgelegte Werte sind, und die Zelle M die erste Nachbarzelle ist.

6. Vorrichtung nach Anspruch 5, wobei die erste Nachbarzelle durch eine Netzwerkseite angezeigt ist oder durch die Endeinrichtung aus den Nachbarzellen der Endeinrichtung ausgewählt ist, und die erste Nachbarzelle eine Zelle ist, die eine starke Uplink-Störung unter den Nachbarzellen der Endeinrichtung empfängt.

7. Vorrichtung nach einem der Ansprüche 5 bis 6, wobei das Übermittlungsleistungsbestimmungsmodul zu Folgendem konfiguriert ist:

wenn der Leistungssteuerparameter den Störungseinflussparameter umfasst, das Bestimmen der Übermittlungsleistung auf Grundlage des Störungseinflussparameters, der Downlink-Streckendämpfung, die an der Berechnung der Übermittlungsleistung beteiligt ist, und eines Parameters, der durch die Netzwerkseite konfiguriert ist, oder
wenn der Leistungssteuerparameter den Streckenkorrekturparameter der Downlink-Streckendämpfung umfasst, das Korrigieren auf Grundlage des Streckenkorrekturparameters der Downlink-Streckendämpfung, der Downlink-Streckendämpfung, die an der Berechnung der Übermittlungsleistung beteiligt ist, und das Bestimmen der Übermittlungsleistung auf Grundlage der korrigierten Downlink-Streckendämpfung und eines Parameters, der durch die Netzwerkseite konfiguriert ist.

8. Vorrichtung nach einem der Ansprüche 5 bis 7, ferner umfassend:
ein Empfangsmodul, das dazu konfiguriert ist, unter Verwendung von dediziertem Signalisieren oder einer Übertragungsmitteilung, Nachbarzelleninformationen zu empfangen, die durch eine Basisstation gesendet wurden.

## Revendications

1. Procédé de régulation de puissance de liaison montante, comprenant :

la détermination (S201 ; S304 ; S401 ; S504), par un terminal, d'un paramètre de régulation de puissance, dans lequel le paramètre de régulation de puissance comprend un paramètre d'impact d'interférence ou un paramètre de correction de trajet d'une perte de trajet de liaison descendante, le paramètre de correction de trajet de la perte de trajet de liaison descendante est utilisé pour corriger une perte de trajet de liaison descendante participant au calcul d'une puissance d'émission, le paramètre d'impact d'interférence et le paramètre de correction de trajet de la perte de trajet de liaison descendante sont déterminés et obtenus sur la base d'informations de cellule voisine du terminal, et les informations de cellule voisine comprennent tout ou partie des informations suivantes : une puissance d'émission de signal de référence d'une cellule voisine, un rapport interférence de liaison montante sur bruit thermique de la cellule voisine, et une charge de liaison montante de la cellule voisine ; et

la détermination (S202 ; S305 ; S402 ; S505), par le terminal, de la puissance d'émission sur la base du paramètre de régulation de puissance déterminé,
dans lequel le processus de détermination du paramètre d'impact d'interférence ou du paramètre de correction de trajet de la perte de trajet de liaison descendante comprend :

la détermination d'une perte de trajet de liaison descendante entre une première cellule voisine et le terminal sur la base d'une puissance d'émission de signal de référence de la première cellule voisine et d'une intensité reçue de signal de référence de la première cellule voisine obtenues au moyen de la mesure par le terminal, dans lequel la première cellule voisine est l'une des cellules voisines du terminal ; et
la détermination du paramètre d'impact d'interférence ou du paramètre de correction de trajet de la perte de trajet de liaison descendante sur la base de la perte de trajet de liaison descendante entre la première cellule voisine et le terminal ou sur la base de la perte de trajet de liaison descendante entre la première cellule voisine et le terminal et d'informations de cellule voisine de la première cellule voisine ;

et **caractérisé en ce que**
le paramètre d'impact d'interférence est déterminé et obtenu selon une première formule ou une deuxième formule :

la première formule est :

$$\beta_c = \theta \cdot \frac{x \cdot IoT_M + y \cdot Charge_M}{z \cdot PL_M},$$

et
la deuxième formule est :

$$\beta_c = \theta \cdot \frac{Charge_M}{PL_M};$$

ou
le paramètre de correction de trajet de la perte de trajet de liaison descendante est déterminé et obtenu selon une troisième formule, une quatrième formule ou une cinquième formule :

la troisième formule est :

$$\alpha_c = \alpha - \gamma / PL_M,$$

la quatrième formule est :

$$\alpha_c = \alpha - \gamma \cdot \frac{x \cdot IoT_M + y \cdot Charge_M}{z \cdot PL_M}\,,$$

et

la cinquième formule est :

$$\alpha_c = \alpha - \gamma \cdot \frac{Charge_M}{PL_M}\,,$$

où

$\beta_c$ représente le paramètre d'impact d'interférence, $\alpha_c(j)$ représente un paramètre de correction de trajet d'une perte de trajet de liaison descendante, $PL_M$ représente une perte de trajet de liaison descendante entre une cellule M et le terminal, $IoT_m$ représente un rapport interférence de liaison montante sur bruit thermique de la cellule M, $Charge_m$ représente une charge de liaison montante de la cellule M, et $\theta, \alpha, \gamma, \chi, y$ et $z$ sont des valeurs spécifiques ; et la cellule M est la première cellule voisine.

2. Procédé selon la revendication 1, dans lequel la première cellule voisine est indiquée par un côté réseau, ou est choisie par le terminal parmi les cellules voisines du terminal, et la première cellule voisine est une cellule qui reçoit une interférence de liaison montante élevée parmi les cellules voisines du terminal.

3. Procédé selon l'une quelconque des revendications 1 et 2, dans lequel, lorsque le paramètre de régulation de puissance comprend le paramètre d'impact d'interférence, la détermination, par le terminal, de la puissance d'émission sur la base du paramètre de régulation de puissance déterminé comprend : la détermination, par le terminal, de la puissance d'émission sur la base du paramètre d'impact d'interférence, de la perte de trajet de liaison descendante participant au calcul de la puissance d'émission et d'un paramètre configuré par le côté réseau ; ou lorsque le paramètre de régulation de puissance comprend le paramètre de correction de trajet de la perte de trajet de liaison descendante, la détermination, par le terminal, de la puissance d'émission sur la base du paramètre de régulation de puissance déterminé comprend : la correction, par le terminal, sur la base du paramètre de correction de trajet de la perte de trajet de liaison descendante, de la perte de trajet de liaison descendante participant au calcul de la puissance d'émission, et la détermination de la puissance d'émission sur la base de la perte de trajet de liaison descendante corrigée et d'un paramètre configuré par le côté réseau.

4. Procédé selon l'une quelconque des revendications 1 à 3, comprenant en outre :
la réception, par le terminal au moyen d'une signalisation dédiée ou d'un message de diffusion, d'informations de cellule voisine envoyées par une station de base.

5. Appareil de régulation de puissance de liaison montante (900), comprenant :

un module de détermination de paramètre de régulation de puissance (901), conçu pour déterminer un paramètre de régulation de puissance, dans lequel le paramètre de régulation de puissance comprend un paramètre d'impact d'interférence ou un paramètre de correction de trajet d'une perte de trajet de liaison descendante, le paramètre de correction de trajet de la perte de trajet de liaison descendante est utilisé pour corriger une perte de trajet de liaison descendante participant au calcul d'une puissance d'émission, le paramètre d'impact d'interférence et le paramètre de correction de trajet de la perte de trajet de liaison descendante sont déterminés et obtenus sur la base d'informations de cellule voisine du terminal, et les informations de cellule voisine comprennent tout ou partie des informations suivantes : une puissance d'émission de signal de référence d'une cellule voisine, un rapport interférence de liaison montante sur bruit thermique de la cellule voisine et une charge de liaison montante de la cellule voisine ; et
un module de détermination de puissance d'émission (902), conçu pour déterminer la puissance d'émission sur la base du paramètre de régulation de puissance déterminé,
dans lequel le module de détermination de paramètre de régulation de puissance est conçu pour déterminer le paramètre d'impact d'interférence et le paramètre de correction de trajet de la perte de trajet de liaison descendante de la manière suivante :

la détermination d'une perte de trajet de liaison descendante entre une première cellule voisine et le terminal sur la base d'une puissance d'émission de signal de référence de la première cellule voisine et d'une intensité reçue de signal de référence de la première cellule voisine obtenues au moyen de la mesure par le terminal, dans lequel la première cellule voisine est l'une des cellules voisines du terminal ; et la détermination du paramètre d'impact d'interférence ou du paramètre de correction de trajet de la perte de trajet de liaison descendante sur la base de la perte de trajet de liaison descendante entre la première cellule voisine et le terminal ou sur la base de la perte de trajet de liaison descendante entre la première cellule voisine et le terminal et d'informations de cellule voisine de la première cellule voisine ;

et **caractérisé en ce que**
le module de détermination de paramètre de régulation de puissance est conçu pour déterminer le paramètre d'impact d'interférence selon une première formule ou une deuxième formule :

la première formule est :

$$\beta_c = \theta \cdot \frac{x \cdot IoT_M + y \cdot Charge_M}{z \cdot PL_M},$$

et
la deuxième formule est :

$$\beta_c = \theta \cdot \frac{Charge_M}{PL_M};$$

ou
le module de détermination de paramètre de régulation de puissance est conçu pour déterminer le paramètre de correction de trajet de la perte de trajet de liaison descendante selon une troisième formule, une quatrième formule ou une cinquième formule :

la troisième formule est :

$$\alpha_c = \alpha - \frac{\gamma}{PL_M},$$

la quatrième formule est :

$$\alpha_c = \alpha - \gamma \cdot \frac{x \cdot IoT_M + y \cdot Charge_M}{z \cdot PL_M},$$

et
la cinquième formule est :

$$\alpha_c = \alpha - \gamma \cdot \frac{Charge_M}{PL_M},$$

où

$\beta_c$ représente le paramètre d'impact d'interférence, $\alpha_c(j)$ représente un paramètre de correction de trajet d'une perte de trajet de liaison descendante, $PL_M$ représente une perte de trajet de liaison descendante entre une cellule M et le terminal, $IoT_m$ représente un rapport interférence de liaison montante sur bruit thermique de la cellule M, $Charge_m$ représente une charge de liaison montante de la cellule M, et $\theta$, $\alpha$, $\gamma$, $\chi$, $y$ et $z$ sont des valeurs spécifiques ; et la cellule M est la première cellule voisine.

6. Appareil selon la revendication 5, dans lequel la première cellule voisine est indiquée par un côté réseau, ou est choisie par le terminal parmi les cellules voisines du terminal, et la première cellule voisine est une cellule qui reçoit une interférence de liaison montante élevée parmi les cellules voisines du terminal.

7. Appareil selon l'une quelconque des revendications 5 et 6, dans lequel le module de détermination de puissance d'émission est conçu pour :

lorsque le paramètre de régulation de puissance comprend le paramètre d'impact d'interférence, déterminer la puissance d'émission sur la base du paramètre d'impact d'interférence, de la perte de trajet de liaison descendante participant au calcul de la puissance d'émission et d'un paramètre configuré par le côté réseau ; ou lorsque le paramètre de régulation de puissance comprend le paramètre de correction de trajet de la perte de trajet de liaison descendante, corriger, sur la base du paramètre de correction de trajet de la perte de trajet de liaison descendante, la perte de trajet de liaison descendante participant au calcul de la puissance d'émission, et déterminer la puissance d'émission sur la base de la perte de trajet de liaison descendante corrigée et d'un paramètre configuré par le côté réseau.

8. Appareil selon l'une quelconque des revendications 5 à 7, comprenant en outre :
un module de réception, conçu pour recevoir, au moyen d'une signalisation dédiée ou d'un message de diffusion, des informations de cellule voisine envoyées par une station de base.

FIG. 1

A terminal determines a power control parameter, where the power control parameter includes an interference impact parameter, and the interference impact parameter may be determined and obtained based on neighboring cell information or neighboring cell interference information of the terminal

S201

The terminal determines a transmit power based on the determined power control parameter

S202

FIG. 2

FIG. 3

A terminal determines a power control parameter, where the power control parameter includes a path correction parameter of a downlink path loss, and the path correction parameter of the downlink path loss may be determined and obtained based on neighboring cell information or neighboring cell interference information of the terminal

S401

The terminal determines a transmit power based on the determined power control parameter

S402

FIG. 4

| Cell n | ... | Cell 2 | | Cell 1 | | Terminal |

S503. RRC message (a parameter used for calculating a path correction parameter of a downlink path loss)

S501. Neighboring cell information (RS transmit power)

S502. Broadcast message (neighboring cell information)

S504. Calculate the path correction parameter of the downlink path loss

S505. Correct the downlink path loss by using the path correction parameter of the downlink path loss, and determine a transmit power based on the corrected downlink path loss

FIG. 5

A base station obtains neighboring cell information of a terminal, and may further obtain at least one of measurement information of the terminal and information about the terminal

S601

The base station selects, for a target channel or a target signal based on the neighboring cell information of the terminal or further based on at least one of the measurement information of the terminal and the information about the terminal, a power control parameter set from a plurality of power control parameter sets corresponding to the target channel or the target signal

S602

The base station notifies the terminal of the selected power control parameter set

S603

FIG. 6

Base station                                                                    Terminal

S701. RRC connection reconfiguration
message (a plurality of power control
parameter sets)

S702. Measurement report (RSRP of a
neighboring cell )

S703. Determine
uplink interference
from the terminal
to the neighboring
cell (an operating
mode of the
terminal)

S704. Notify, by using DCI, the terminal of
which power control parameter set is used

FIG. 7

A terminal determines an operating mode of the terminal based on at least one of a height in which the terminal is located, neighboring cell information of the terminal, and measurement information of the terminal

S801

The terminal selects, based on the operating mode of the terminal, a power control parameter set from a plurality of power control parameter sets corresponding to a target channel or a target signal

S802

The terminal determines a transmit power of the target channel or the target signal based on the selected power control parameter set

S803

FIG. 8

Uplink power control apparatus (terminal)

900

901

902

Power control parameter determining module

Transmit power determining module

FIG. 9

FIG. 10

FIG. 11

1200

Base station

1202

Transceiver

1201

Processor

1203

Memory

FIG. 12

1301

Operating mode determining module

1302

Power control parameter selection module

1303

Transmit power determining module

1300

A plurality of power control parameter sets

1304

Receiving module

Uplink power control apparatus (terminal)

FIG. 13

1400

Terminal

1402

Transceiver

1401

Processor

1403

Memory

FIG. 14

Information transmission apparatus (base station)

1500

1501

Obtaining module

1502

Sending module

FIG. 15

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104144486 A
- WO 2015011557 A1
- EP 2464176 A2